# EUROPÄISCHE PATENTANMELDUNG

(11) **EP 4 837 643 A1**
(43) Veröffentlichungstag der Anmeldung: **11.11.2026**
(21) Anmeldenummer: 26176568.9
(22) Anmeldetag: 05.05.2026
(51) Int. Cl.: A63B 71/14, A41D 19/00, A41D 19/015, B29C 41/14, B29C 41/20, B29C 41/22, B29L 31/48

(54) **SPORTHANDSCHUH, INSBESONDERE FUSSBALLTORWARTHANDSCHUH, UND VERFAHREN ZU DESSEN HERSTELLUNG**

(30) Priorität: 08.05.2025 DE 102025117794
(71) Anmelder: Hochmuth GmbH & Co. KG, 91757 Treuchtlingen (DE)
(72) Erfinder: HEU, Georg, 2542 Kottingbrunn (AT); HOCHMUTH, Christian, 91757 Treuchtlingen (DE)
(74) Vertreter: Meissner Bolte Nürnberg

(57) **Zusammenfassung**

Die Erfindung betrifft ein Verfahren zur Herstellung eines Sporthandschuhs, insbesondere Fußballtorwarthandschuhs, bei dem zunächst ein Trägerhandschuh, vorzugsweise aus textilem Material, bereitgestellt wird. In einem ersten Beschichtungsschritt wird eine Grundschicht aufgebracht, welche den Innenhandbereich vollständig oder im Wesentlichen vollständig und den Außenhandbereich zumindest bereichsweise bedeckt. In einem zweiten Beschichtungsschritt werden vorgegebene Funktionsbereiche selektiv mit einer Kontaktschicht beschichtet, mindestens an den ersten inneren Fingergliedbereichen mehrerer Finger und wahlweise (i) kontinuierlich über die Fingerkuppen hinweg in die korrespondierenden ersten äußeren Fingergliedbereichen oder (ii) zumindest abschnittsweise im Handtellerbereich. Die Schichten werden durch Aufsprühen, 3D-Bedrucken oder Eintauchen aus entsprechenden Beschichtungsflüssigkeiten aufgebracht. Das Verfahren erzeugt zonenselektive, nahtfreie Funktionsschichten mit erhöhter Griffigkeit in Ballkontaktzonen und optionalen Abwehrzonen. Ferner betrifft die Erfindung einen Sporthandschuh, insbesondere Fußball-Torwarthandschuh, der nach dem Verfahren hergestellt ist.

## Beschreibung

Die Erfindung betrifft ein Verfahren zum Herstellen eines Sporthandschuhs, insbesondere Fußballtorwarthandschuhs, und einen Sporthandschuh, insbesondere Fußballtorwarthandschuh, der insbesondere mit dem Verfahren hergestellt wird oder ist.

Im Fußballsport tragen die Torwarte in der Regel Torwarthandschuhe, um die Fußbälle leichter abwehren und fangen zu können.

An der Innenseite oder Innenhand des Torwarthandschuhs sind im Allgemeinen das Greifen, Fangen oder Aufnehmen des Balles unterstützende Funktionsschichten (oder: Funktionslagen) mit einer guten Griffigkeit und/oder guten Dämpfungseigenschaften angeordnet.

Dazu sind an der Innenhand Verbundschichten aus einer Greif- oder Fangschicht, die mit dem Ball in Berührung kommt und eine hohe Griffigkeit zum Greifen oder Fangen des Balles aufweist, und einer darunter liegenden Dämpfungsschicht oder Trägerschicht, die für die gewünschte Dämpfung sorgt, bekannt. Die Dämpfungsschicht ist in der Regel auf einer dünnen Textilschicht, üblicherweise ein gestricktes oder gewebtes Innenfutter, angeordnet, die auch auf der anderen Seite mit der Hand des Torwarts in Kontakt kommt. Auch zwischen der Dämpfungsschicht und der Greifschicht ist eine dünne Textilschicht angeordnet, um diese miteinander zu verbinden.

Für diese Funktionsschicht an der Innenhand, insbesondere die Greifschicht (Fangschicht) in der Verbundschicht, wird als Material zumeist ein Naturgummi- oder Naturkautschukschaum verwendet, der aus geschäumter polymerisierter Latexemulsion aus Naturkautschuk hergestellt wird und auch kurz Latex oder Latexschaum genannt wird. Das Ballgefühl und die Griffigkeit sind mit diesem natürlichen Material weiterhin am Besten. Für die Dämpfungsschicht wird als Material meist ein Polyurethanschaum (PU-Schaum) verwendet. Die Verbindung zwischen der PU-Schaum-Dämpfungsschicht und der Naturkautschuklatex-Fangschicht wird über die dazwischen liegende Textilschicht gewährleistet.

An der Außenseite des Torwarthandschuhs sind die Ballabwehr unterstützende Funktionsschichten bekannt mit einer Dämpfungsfunktion und/oder ausreichenden Elastizität, meist aus Elastomeren oder Elastomerschäumen, insbesondere auch aus Latex.

Die Funktionsschichten werden mit dem Innenfutter gemeinsam an den Rändern der Finger und zwischen Innenhand und Außenhand vernäht. Dadurch sind Nähte gebildet.

Aus DE 36 41 609 C1 ist ein Haftschaum-Material für Torwarthandschuhe bekannt, bei dem eine Schicht aus Latexschaum auf ein Trägermaterial aufgebracht wird und nach einer teilweisen Vulkanisierung mit Vertiefungen versehen wird, in welche ein zweiter Latexschaum eingegossen wird.

DE 299 05 619 U1 beschreibt einen Sporthandschuh sowie ein mehrlagiges Material für einen Sporthandschuh, bei dem mehrere Polsterteile nebeneinander auf einem Trägermaterial aufgebracht sind, wobei zwischen den Polsterteilen Lücken, Rillen oder Abstände vorgesehen sind. Dies dient insbesondere dazu, die Außenhandseiet des Handschuhs optisch in unterschiedlichen Farben gestalten zu können. Auf der Innenhandseite kann eine Lücken aufweisende Oberfläche jedoch nachteilig sein, da beispielsweise die Fangeigenschaften negativ beeinträchtigt werden können.

Die DE 90 04 002 U1 und DE 88 02 920 U1 beschreiben Torwarthandschuhe, bei welchen das Innenhandteil aus mehrlagigen Materialien gebildet ist.

Die DE 196 23 928 A1 offenbart einen Sporthandschuh, insbesondere Fußballtorwarthandschuh, mit einem die Außenseite der Innenhand bildenden Innenhandmaterial aus geschäumtem Latex auf textilem Trägermaterial und einer zusätzlichen aufpralldämpfenden Polsterung, die auf einer der Handfläche zugewandten Innenfläche des Innenhandmaterials angeordnet ist. Die zusätzliche Polsterung ist mit einem dreidimensionalen Abstandsgewebe oder einem Polyurethan-Weichschaum gebildet oder mit einem Latexschaum-Material gebildet. Die Innenhand ist mit der Außenhand vernäht. Zur Herstellung des Innenhandteils ist geschäumter Latex in flüssiger Form auf einen Baumwoll-Gewebeträger aufgetragen und die als Rollenware passender Breite vorgefertigte zusätzliche Polsterung ist unter Zwischenschaltung einer als Schmelzkleber dienenden Moltoprenschicht mit dem Baumwoll-Gewebeträger des Innenhandmaterials durch Flammkaschierung verbunden.

EP 1 563 749 A2 offenbart einen Handschuh mit einer Innenhandfläche aus einem flüssigkeitsdichten, atmungsaktiven Material, insbesondere Gummi, und einem Handschuhrücken, der zumindest in einer Schicht aus einem flüssigkeitsdichten, atmungsaktiven Material, insbesondere einem Gewebe oder Vlies mit einer flüssigkeitsdichten und atmungsaktiven Membrane ausgebildet ist. Auch die Fingerspitzen können mit dem Material der Innenhandfläche überzogen sein. Die Nähte zwischen Innenhandfläche und Handrücken werden flüssigkeitsdicht versiegelt durch Tauchen mit Kunststoff, Gummi, Latex oder Nitril. Dieser Handschuh ist für den Haushalt vorgesehen, ein Einsatz als Torwarthandschuh wird nicht erwähnt.

EP 1 685 767 A1 beschreibt die Herstellung eines Handschuhs, bei dem ein gestricktes oder gewebtes Innenhandteil und ein gestricktes oder gewebtes Außenhandteil miteinander vernäht werden und dann dieser Grundhandschuh mit den Nähten auf eine Handform aufgesteckt wird und mit einem Gummimaterial, insbesondere NBR-Gummi, durch flaches Eintauchen mit dem Innenhandteil zuerst und nach unten in ein Tauchbad mit dem flüssigen Beschichtungsmaterial an einigen Stellen beschichtet wird, um an diesen Stellen die Nähte nach hinten zu versetzen, zu überdecken und zu fixieren. Es sind Einsatzmöglichkeiten als Arbeitshandschuhe und auch als Sporthandschuh erwähnt, nicht jedoch als Torwarthandschuh, für den die spezielle Ausbildung dieses bekannten Handschuhs auch kaum geeignet wäre.

EP 2 197 302 B1 offenbart ein Verfahren zum Herstellen eines leichten, flexiblen Handschuhs, der aus einer handschuhförmigen Auskleidung mit mehreren Fingerbestandteilen, einem Daumenbestandteil und einem Handflächenbestandteil besteht, woran eine Latexbeschichtung zumindest an einem Teil anhaftet und nicht die gesamte Dicke der gestrickten Auskleidung durchdringt. Der Rohling kann in Latex getaucht werden. Ein Einsatz im Sportbereich wird nicht erwähnt.

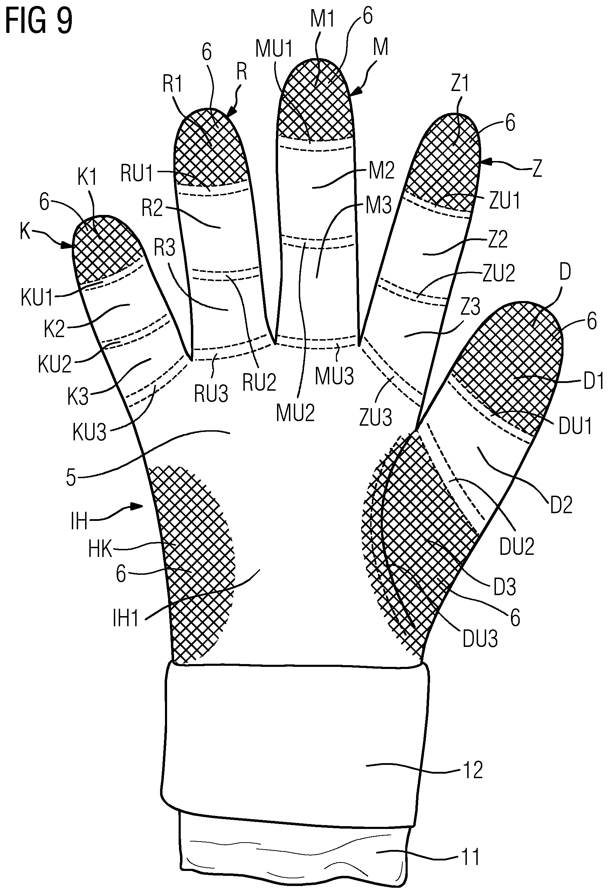

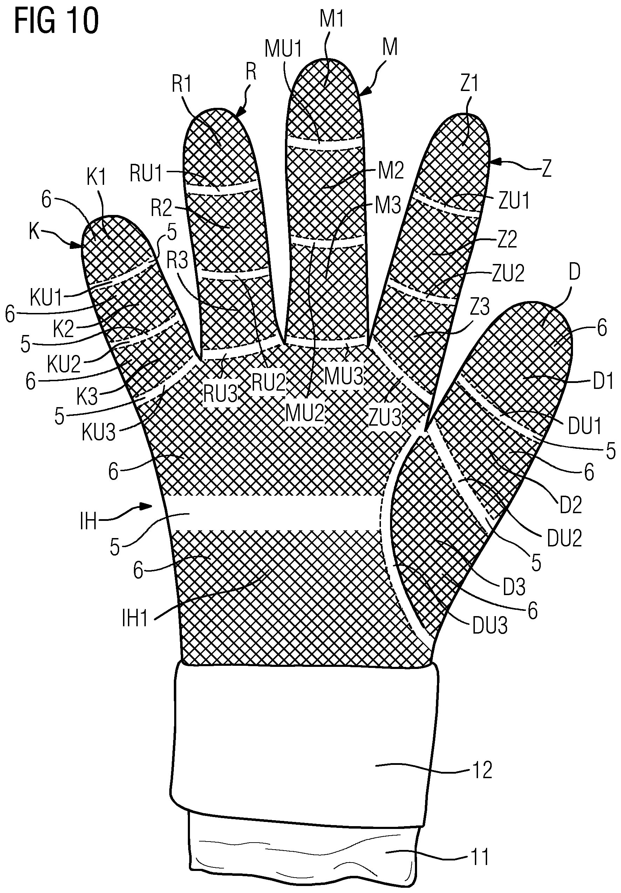

EP 2 814 349 B1 beschreibt einen nahtlos gestrickten Handschuh zum Gebrauch in der Industrie oder im Haushalt mit einem Futter, aufweisend ein Hauptgarn, und mit mindestens einer gestrickten Rippe innerhalb des Futters und mit einer Polymerbeschichtung, insbesondere Latexbeschichtung, die auf dem Futter und der gestrickten Rippe angeordnet ist. Das Rippengarn der Rippe ist ein vom Hauptgarn verschiedenes geflochtenes Garn. Die gestrickten Rippen stehen an der Oberfläche des Futters vor, so dass verstärkte Profilrippen an der Handschuhoberfläche gebildet werden. Die Polymerbeschichtung, insbesondere Naturlatexbeschichtung, wird durch Eintauchen des gestrickten Futters in ein Polymermaterial gebildet. Dabei kann die Innenhand des Handschuhs und die Innenseiten der Finger- und Daumenbereiche vollständig mit der Polymerbeschichtung versehen werden und die Außenseiten der Fingerbereiche und des Daumenbereichs nur teilweise entlang der Ränder oder Außenkonturen mit dem Polymer beschichtet werden (siehe FIG 9 und 10). Es kann auch ein Koagulationsmittel als Zwischenschicht zur Verhinderung eines Durchfließens des Polymers durch das gestrickte Futter aufgebracht werden. Außerdem kann das Tauchen die Handinnenfläche, das Handgelenk, die Finger, drei Viertel oder die gesamte Hand umfassen (siehe Absatz 0015). Ein Einsatz als Sporthandschuh ist nicht offenbart. Als Torwarthandschuh wäre dieser bekannte Handschuh aufgrund der Verstärkungsrippen ungeeignet.

Die EP 3 109 045 A1 offenbart einen Torwarthandschuh, umfasst eine Trägerschicht, eine erste Materialschicht und zumindest eine zweite Materialschicht, wobei die erste Materialschicht und die zumindest eine zweite Materialschicht derart nebeneinander auf der Trägerschicht aufgebracht sind, dass die erste Materialschicht und die zumindest eine zweite Materialschicht in einem Gelenksbereich unmittelbar aneinandergrenzen. Das Aufbringen der ersten und der zweiten Materialschicht erfolgt nahtlos beispielsweise durch Aufgießen der Materialschichten auf eine sich kontinuierlich bewegende Trägerschicht und Glätten mittels eines Streichmessers bzw. Rakel. Das Innenhandteil mit den beiden Materialschichten wird aus der Materialbahn ausgestanzt oder ausgeschnitten. Eine gute Verbindung der ersten Materialschicht mit der zweiten Materialschicht und der Trägerschicht kann durch Vulkanisation erreicht werden. Die Trägerschicht umfasst beispielsweise ein Textilmaterial, bei der ein Polstermaterial zwischen zwei Stoffbahnen eingeschlossen ist. Die erste und die zweite Materialschicht sind insbesondere jeweils aus einer geschäumten Latexmasse gebildet. Vorzugsweise unterscheiden sich die erste Materialschicht und die zumindest eine zweite Materialschicht zumindest hinsichtlich einer Materialeigenschaft, z.B. in ihrer Farbe und/oder Griffigkeit und/oder Abriebfestigkeit und/oder Härte. Schichtel zwischen Innenhandteil und das Außenhandteil in Fingerbereichen und Daumenbereich sind durch Nähte verbunden.

Die US 2010/032577 A1 beschreibt lederfreie Sporthandschuhe mit einem Handschuhkörper und einer haftenden, ausgehärteten Elastomerbeschichtung, wobei die Beschichtung ein Haftmittel enthält. Die Herstellung solcher Sporthandschuhe umfasst das Eintauchen in eine Koagulationslösung und mindestens eine wässrige Emulsionszusammensetzung, welche einen Kautschuklatex und/oder ein Haftmittel umfasst.

Aus der US 2009/0139007 A1 ist bekannt, einen Handschuh aus einer Basisschicht aus einem flexiblen Material auf der Handflächenseite mit einer zweiten Schicht zu versehen. Die zweite Schicht definiert eine Vielzahl von Kontaktbereichen und eine Kontaktfläche, wobei die Kontaktfläche eine Vielzahl von definierten Lamellenrillen aufweist, wobei die Lamellenrillen Flüssigkeit von der Kontaktfläche wegleiten. Eine Vielzahl von Kanälen ist zwischen Abschnitten der zweiten Schicht definiert, wobei die Kanäle Flüssigkeit von den Kontaktbereichen wegleiten.

Die DE 30 41 906 A1 offenbart ein Verfahren zur Beschichtung eines textilem Futterhandschuhs, wobei der Futterhandschuh auf eine dreh- und schwenkbare Form gezogen wird und unterhalb von Verteilungsmitteln für Flüssigkeiten platziert ist. Die Flüssigkeiten werden durch die Schwerkraft auf den Futterhandschuh gebracht und mittels des Dreh- und Schwenkmechanismus gleichmäßig auf Futterhandschuh verteilt.

Die GB 1 497 944 A betrifft einen Former für eine Tauchbeschichtungsanlage. Der Daumenstift des Formers ist verstellbar ausgebildet, um das An- bzw. Ablegens des Handschuhs zu erleichtern. Der Former ist zudem aus einem Material mit geringer Wärmekapazität ausgebildet, um ein schnelleres Aufheizen und Abkühlen der Handschuhe zu ermöglichen.

Aus der DE 10 2013 110 563 A1 geht ein personenbezogener Fingerhandschuh hervor, der auf einem individuellen 3D-Handmodell hergestellt ist. Einer innere Stricklage wird auf das Modell gezogen und mit einer Außenschicht aus thermisch aktivierbarem bzw. thermoplastischem Kunststoff versehen.

Die US 2021/0251317 A1 beschreibt Strickhandschuhe mit gezielter Beschichtung auf der Innenseite des Handschuhs, um eine Schlupfbewegung zwischen Hand und Handschuh zu verringern. Dafür wird die Innenseite in mehreren Tauchbeschichtungen durch Durchschlag mit Polymerbeschichtungen beschichtet.

Eine gute Zusammenfassung zu Naturkautschuk findet sich auf https://de.wikipedia.orq.wiki/Naturkautschuk, wonach über 99 % des Naturkautschuks heute aus Hevea-Kautschuk (Kautschukbaum) stammt. Der Latex oder Milchsaft des Kautschukbaums ist eine kolloide Dispersion von typischerweise etwa einem Drittel Kautschuk in einer wässrigen Lösung. Hauptbestandteil des Kolloids ist ein Polymer aus Isopren-Einheiten, das cis-1,4-Polyisopren; andere Stoffe sind Proteine und Harze, die die Kolloide stabilisieren. Naturkautschuk (wie auch synthetischer Kautschuk) kann vulkanisiert werden, d.h. einer weitmaschigen chemischen Vernetzung zum Erzielen elastischer Eigenschaften unterzogen werden, beispielsweise mit Schwefel oder mit Peroxiden, Metalloxiden oder auch durch thermische Vernetzung. Kautschuk kann zu Porengummi weiterverarbeitet werden, bei dem der elastische Schaumstoff Porenstrukturen von völlig geschlossen bis völlig geöffnet haben kann.

In dem Fachbuch von Adolf Franck, "Kunststoff-Kompendium: Herstellung, Aufbau, Verarbeitung, Anwendung, Umweltverhalten und Eigenschaften der Thermoplaste, Polymerlegierungen, Elastomere und Duroplaste" 5. Auflage 2000, Vogel Verlag ist auch Einiges zu Kautschuk erläutert und beschrieben, worauf im Folgenden Bezug genommen wird: Die direkte Verarbeitung der bei der synthetischen Herstellung durch Polymerisation entstehenden Kautschukemulsion wie auch der natürlichen Kautschukemulsion *(Latex)* verläuft beispielsweise in folgenden Stufen:
1. Einrühren der fein gemahlenen Vulkanisationszusätze.
2. Formgebung und Koagulation der Emulsion:
   a) Tauchverfahren: Eintauchen einer 60 bis 80°C warmen Glas-, Porzellan- oder Leichtmetallform in Latex. Es koaguliert eine dünne Schicht an der Oberfläche der Form. Wärmesensibilisierung des *Latex.*
   b) Gießverfahren: Koagulation in poröser Hohlform.
   c) Schaumverfahren: Geschäumter Latex wird in der heißen Form koaguliert.
   d) Spinnverfahren: Latex wird in ein saures Fällbad gespritzt.
   e) Streichverfahren: Gewebe werden mit Latex imprägniert.
3. Anschließend erfolgt die Vulkanisation durch Dampf, kochendes Wasser oder Heißluft.

Kautschuklatex kann über den flüssigen oder zähflüssigen Zustand durch Begasung in Schäume umgewandelt werden, insbesondere durch die folgenden Methoden der Schaumerzeugung:
1. Schaumschlagen: Einschlagen von Luft (Schlagsahneverfahren) z.B. in UF-Vorkondensat
2. Hochdruckverfahren: Permanente Gase (Stickstoff oder CO₂) werden unter einem Druck von ca. 200 bar in der Schmelze von Thermoplasten gelöst. Das Aufschäumen erfolgt
   a) durch Entspannen der unter Druck stehenden Schmelze (Keimbildner, Porenregler: Aerosil^{®}),
   b) durch Wiedererwärmen einer solchen unter Druck abgekühlten Masse,
   c) durch Sättigen von PVC-Paste mit CO₂, Versprühen und *Schäumen* beim Erhitzen im Gelierkanal (Troviporverfahren).

Es ist nun eine Aufgabe der Erfindung, eine neue Herstelloption für einen Sporthandschuh, insbesondere Fußballtorwarthandschuh, anzugeben, mit der mit großen Freiheitsgraden verschiedene Handschuhzonenanordnungen mit verschiedenen Funktionalitäten oder Materialien verwirklicht werden können.

Diese Aufgabe wird durch ein Verfahren zum Herstellen eines Sporthandschuhs, insbesondere Fußballtorwarthandschuhs, gemäß der Erfindung, insbesondere gemäß Patentanspruch 1, gelöst. Vorteilhafte Ausgestaltungen und Weiterbildungen der Erfindung ergeben sich aus den abhängigen Ansprüchen und der nachfolgenden Beschreibung.

Die beanspruchbaren Merkmalskombinationen und Gegenstände gemäß der Erfindung sind nicht auf die gewählte Fassung und die gewählten Rückbeziehungen der Patentansprüche beschränkt. Es kann jedes Merkmal in den Patentansprüchen, auch unabhängig von deren Rückbeziehungen, in einer beliebigen Kombination mit einem oder mehreren anderen Merkmal(en) in den Patentansprüchen beansprucht werden. Ferner kann jedes Merkmal einer Anspruchskategorie, beispielsweise dem Verfahren, auch in einer anderen Anspruchskategorie, beispielsweise dem auf den Sporthandschuh gerichteten Anspruch, beansprucht werden und umgekehrt. Außerdem kann jedes Merkmal, das in der Beschreibung oder Zeichnung oder in einer Ausführungsform beschrieben oder offenbart ist, für sich, unabhängig oder losgelöst von dem Zusammenhang, in dem es steht, allein oder in jeglicher Kombination mit einem oder mehreren anderen Merkmalen, das oder die in den Patentansprüchen oder in der Beschreibung oder Zeichnung oder Ausführungsformen beschrieben oder offenbart ist oder sind, beansprucht werden.

In einer Ausführungsform des Verfahrens zum Herstellen eines Sporthandschuhs, insbesondere Fußballtorwarthandschuh, gemäß Patentanspruch 1 wird ein Trägerhandschuh, vorzugsweise aus einem textilen Material bereitgestellt. Der Trägerhandschuh und/oder der Sporthandschuh weist einen Innenhandbereich und einen Außenhandbereich auf und ist mit einem Daumenbereich, einem Zeigefingerbereich, einem Mittelfingerbereich, einem Ringfingerbereich und einem Kleiner-Finger-Bereich sowie einem Handtellerbereich und einem Handrückenbereich ausgebildet. An jedem Fingerbereich weist der Trägerhandschuh und/oder der Sporthandschuh für jedes der, von distal nach proximal gesehen, ersten bis dritten Fingerglieder jeweils einen zugehörigen ersten bis dritten inneren Fingergliedbereich und einen zugehörigen ersten bis dritten äußeren Fingergliedbereich und für jedes der, von distal nach proximal gesehen, ersten bis dritten Fingergelenke jeweils einen zugehörigen ersten bis dritten inneren Finger-Gelenkbereich und einen zugehörigen ersten bis dritten äußeren Fingergelenkbereich auf.

Das Verfahren umfasst einen ersten Beschichtungsschritt bei dem der Innenhandbereich des Trägerhandschuhs vollständig oder im Wesentlichen vollständig sowie der Außenhandbereich des Trägerhandschuhs im Bereich der ersten äußeren Fingergliedbereiche zumindest teilweise mit einer Grundschicht beschichtet wird durch Aufsprühen oder 3D-Bedrucken einer oder Eintauchen in eine erste Beschichtungsflüssigkeit.

Weiterhin umfasst das Verfahren einen zweiten Beschichtungsschritt bei dem auf die Grundschicht und/oder auf freie Bereiche des Trägerhandschuhs vorgegebene Funktionsbereiche selektiv mit einer Kontaktschicht, insbesondere Ballkontaktschicht, beschichtet werden durch Aufsprühen oder 3D-Bedrucken einer oder Eintauchen in eine zweite Beschichtungsflüssigkeit.

Die vorgegebenen Funktionsbereiche umfassen zumindest teilweise die ersten inneren Fingergliedbereiche einer ausgewählten Mehrzahl von Fingerbereichen sowie wahlweise zumindest teilweise die ersten äußeren Fingergliedbereiche der ausgewählten Fingerbereiche kontinuierlich über die Fingerkuppen hinweg, zumindest teilweise den Handtellerbereich, oder zumindest teilweise die ersten äußeren Fingergliedbereiche der ausgewählten Fingerbereiche kontinuierlich über die Fingerkuppen hinweg und zumindest teilweise den Handtellerbereich.

In Verbindung mit den Fingerbereichen dient der Innenhandbereich dem Fangen und Abwehren von Bällen. Neben dem Daumenbereich sind vier Fingerbereiche vorgesehen. Es ist jedoch auch möglich Fingerbereiche vorzusehen, die zwei oder mehr Fingern des Torwarts zugeordnet sind. Dies ermöglicht das Anlegen des Handschuhs auch mit Tape zusammengehaltene Finger, beispielsweise bei Verletzungen. Die Grundschicht und/oder die Kontaktschicht umfasst funktionale Beschichtungen zum Unterstützen des Abwehrens, des Fangens, des Greifens und des Aufnehmens von Bällen, wie beispielsweise Beschichtungen, die der Dämpfung und/oder der Griffigkeit dienen. Der mit dem Innenhandbereich verbundenen Außenhandbereich, welcher den Handrücken und die Außenseiten der Finger bedeckt, dient unter anderem dem sogenannten Fausten oder generell blockenden oder schlagenden Abwehren von Bällen und es können Dämpfungselemente und/oder Dämpfungsbeschichtungen vorgesehen sein, die den Außenhandbereich zumindest teilweise bedecken.

Die Vorteile der Erfindung liegen darin, dass die zweistufige Schichtarchitektur (zunächst Grundschicht, danach selektive Kontaktschicht) die Materialeigenschaften funktionsgerecht trennt. Die Grundschicht sorgt für Abrieb- und Dämpfungsreserve, während die Kontaktschicht gezielt hohe Griffigkeit beim Ballkontakt definiert. Die selektive Applikation der Kontaktschicht auf die ersten inneren Fingergliedbereiche einer Mehrzahl von Fingern stellt die Griffigkeit genau dort bereit, wo der Ball typischerweise zuerst kontaktiert wird, was das Fangen und Festhalten signifikant verbessert.

Die wahlweise kontinuierliche Führung der Kontaktschicht über die Fingerkuppen hinweg in die ersten äußeren Fingergliedbereiche ("wrap-around") schafft einen durchgehenden Reibpfad von der Innen- zur Außenseite schafft, was die Kontrolle in Roll- und Kippbewegungen des Balls erhöht und die Greif- bzw. Faustsicherheit erhöht. Alternativ oder zusätzlich verbessert die definierte Beschichtung zumindest eines Teils des Handtellerbereichs mit der Kontaktschicht die Flächenhaftung für verschiedene Fang- und Abwehrtechniken sowie die Ballkontrolle am Handtellerbereich.

Durch die selektive Beschichtung nur in Funktionsbereichen oder -zonen wird unnötiges Zusatzgewicht vermieden, die Beweglichkeit gefördert und der Tragekomfort gesteigert. Zugleich sinkt der Material- und Energieeinsatz in der Fertigung. Weiterhin verbessert die gezielte Verstärkung der hoch beanspruchten Fingerkuppen außen und/oder der Ballkontaktzonen innen die Verschleißbilanz des Handschuhs und erhöht die Lebensdauer.

Die Wahl der Auftragsverfahren (Aufsprühen, 3D-Bedrucken, Eintauchen) erlaubt eine hohe Prozessflexibilität. Tauchen oder Sprühen erzeugt homogene Schichten in einer kurzen Zeitspanne, der additive Freistrahl-/3D-Auftrag ermöglicht scharf begrenzte, reproduzierbare Funktionsfelder mit hoher Positionsgenauigkeit. Somit sind nahtfreie Übergänge zwischen beschichteten und unbeschichteten Bereichen möglich, was Druckstellen vermeidet und die haptische Qualität erhöht. Auch sind unterschiedliche Material-Mischungen für Grund- und Kontaktschicht kombinierbar, sodass der Handschuh für anwendungs- oder spielstilspezifisch abgestimmt werden kann, beispielsweise für trockenen oder nasse Spielbedingungen oder unterschiedlichen Beläge des Fußballplatzes, wie Rasen, Kunstrasen oder Hartplatz.

Das Verfahren ist skalierbar und automatisierbar und somit eine wirtschaftliche, reproduzierbare Serienfertigung von zonenoptimierten Torwarthandschuhen ermöglicht.

Eine Ausgestaltung des Verfahrens oder des Sporthandschuhs sieht vor, dass die erste Beschichtungsflüssigkeit und/oder die zweite Beschichtungsflüssigkeit auf Basis von Naturkautschuk(en) und/oder Synthesekautschuk(en), insbesondere als Schaum, vorgesehen wird bzw. ist. Geeignete elastische Materialen für die Beschichtungsflüssigkeiten sind insbesondere Isopren- oder Naturkautschuk-Elastomere (IR, NR), Siloxan-Elastomer (SI), insbesondere ein Siloxankautschuk (SIR), Butadien-Elastomere (BR), Styrol/Butadien-Elastomere (SBR), Acrylnitril/Butadien-Elastomere (NBR), Isopren/Isobuthylen-Copolymere (Butylkautschuk), Vinylelastomere, insbesondere Ethylen-Propylen-Copolymere (EPDM, EPM), Ethylen-Vinylacetat-Copolymere (EVAC), Acrylkautschuk (ACM), Polyisobuthylen (PIB),Urethankautschuk (PUR) oder thermoplastische Elastomere (TPE). Durch unterschiedliche Materialkombinationen können Grund- und Kontaktschicht für den jeweiligen Einsatzzweck maßgeschneidert werden. NR oder IR erzeugen beispielsweise Schichten mit hoher Griffigkeit und weicher Haptik für den Ballkontakt. NBR erhöht die Abriebfestigkeit, während SBR oder BR die Elastizität und Rückprallelastizität verbessert. PUR bietet eine hohe Reißfestigkeit.

Es kann für das Verfahren oder den Sporthandschuhs vorgesehen sein, dass in dem ersten Beschichtungsschritt die Grundschicht *in situ* vulkanisiert wird bzw. ist, vorzugsweise durch thermisches Vulkanisieren in einem Wärmebehandlungsschritt nach dem Aufbringen der Beschichtungsflüssigkeit, und/oder bei dem in dem zweiten Beschichtungsschritt die Kontaktschicht *in situ* vulkanisiert wird bzw. ist, vorzugsweise durch thermisches Vulkanisieren in einem Wärmebehandlungsschritt nach dem Aufbringen der Beschichtungsflüssigkeit. In-situ-Vulkanisation bzw. das damit verbundene thermische Vernetzen erhöht die Verbundfestigkeit, fixiert Konturen und verhindert ein Nachfließen der Beschichtung. Somit entsteht ein kohäsiver Schichtverbund ohne Delamination. Die Schichten sind auch unter Scher- und Biegebeanspruchung delaminationsstabil, was die Haltbarkeit und den Tragekomfort verbessert. Die In-situ-Vulkanisation kann inline, beispielsweise mittels Heißluft/Dampf, in den Beschichtungsprozess integriert werden.

Gemäß einer Ausführungsform des Verfahrens oder des Sporthandschuhs wird bzw. ist ein einstückiger oder einteiliger oder aus einem zusammenhängenden Textilteil oder Textilmaterial gebildeter Trägerhandschuh verwendet, der, im angezogenen Zustand, eine die Hand des Torwarts komplett umschließende oder einkleidende Form aufweist mit den die Finger der Hand umschließenden Fingerbereichen und dem den Handteller der Hand abdeckenden Handtellerbereich und dem den Handrücken der Hand abdeckenden Handrückenbereich und nur im Handgelenkbereich eine Öffnung, durch die die Hand des Torwarts eingeführt werden kann, aufweist, wodurch der Trägerhandschuh eine kontinuierliche, bis auf die Öffnung geschlossene externe Oberfläche aufweist und eine kontinuierliche der Hand zugewandte und von der externen Oberfläche abgewandte interne Oberfläche, wobei auf die externe Oberfläche die Grundschicht bzw. Kontaktschicht aufgebracht wird. Die kontinuierliche externe Oberfläche begünstigt eine gleichmäßige Benetzung und Schichtdicken ohne Nahtaufwerfungen, wobei Kantenrisse und lokale Überstärken reduziert werden.

Eine weitere Ausführungsform des Verfahrens oder des Sporthandschuhs sieht vor, dass der Trägerhandschuh zunächst von einer an die Handform des Trägerhandschuhs angepassten Halteform, vorzugsweise durch die Öffnung, von innen ergriffen oder auf diese gezogen wird bzw. ist und vorzugsweise während des gesamten Beschichtungsverfahrens zumindest teilweise formschlüssig und/oder in der zu beschichtenden externen Oberfläche in ihrer Gestalt räumlich stabil gehalten wird bzw. ist, wobei insbesondere ein Schwenkmechanismus zum Einschwenken eines Daumenelements der Halteform für das Einführen in den Trägerhandschuh und anschließendes Ausschwenken für das Beschichtungsverfahren vorgesehen ist und/oder vorzugsweise ein Bewegungsmechanismus mit Antrieben zum Zusammenführen und Spreizen wenigstens eines Teils der Fingerelemente der Halteform, beispielsweise als Roboterhand eines humanoiden Roboters, wobei die Bewegung einer menschlichen Hand beim Anziehen oder Ausziehen eines Handschuhs von der Roboterhand nachgeahmt wird. Alternativ oder zusätzlich transportiert ein Roboter, insbesondere Industrieroboter oder humanoider Roboter, oder ein Endlostransportmechanismus die Halteform mit dem darauf befindlichen Trägerhandschuh durch die verschiedenen Prozessschritte. Dies erhöht die Prozesssicherheit und verkürzt Taktzeiten, reduziert Bedienfehler und steigert die Reproduzierbarkeit im Serienprozess.

Der auf der Halteform befindliche Trägerhandschuh kann zu einem Tauchbad transportiert werden und zum Beschichten mit der Grundschicht oder auch der Kontaktschicht zumindest teilweise in die darin befindliche Beschichtungsflüssigkeit getaucht werden bzw. sein. Alternativ kann der auf der Halteform befindliche Trägerhandschuh zu einer Sprühvorrichtung transportiert werden und dort mit der für die Grundschicht oder auch die Kontaktschicht vorgesehenen Beschichtungsflüssigkeit besprüht werden bzw. sein. Vorzugsweise bildet sich jeweils eine Schicht aus Beschichtungsflüssigkeit, die an dem Textilmaterial des Trägerhandschuhs an dessen externer Oberfläche anhaftet und an einem weiteren Eindringen in den Hohlraum des Trägerhandschuhs durch die intern an der Textilschicht anliegende Außenfläche der Halteform gehindert wird. Das Tauchverfahren und das Sprühverfahren bieten jeweils eine hohe Gleichmäßigkeit und Materialeffizienz sowie eine gute Skalierbarkeit.

Ein weitere Ausführungsform des Verfahrens oder des Sporthandschuhs sieht vor, dass der auf der Halteform befindliche Trägerhandschuh zu einer handförmigen Negativform transportiert wird und zum Beschichten mit einer Schicht zumindest teilweise in die darin befindliche Beschichtungsflüssigkeit getaucht wird, wobei die handförmige Negativform als zumindest teilweise handförmige Wanne ausgebildet ist, deren Hohlraum zumindest teilweise die Kontur zumindest eines Bereichs zumindest einer Hand aufweist, wobei die Halteform vorzugsweise von einem Roboter gehalten ist, welcher definierte Bewegungsprofile bei Eintauchen, Verweilen oder Auftauchen ausführt, wobei die handförmige Negativform insbesondere temperierbar ausgebildet ist, um Materialeigenschaften der Beschichtungsflüssigkeit BF anzupassen, wobei in der handförmigen Negativform vorzugsweise Inseln oder Erhöhungen vorgesehen sind, so dass nicht zu beschichtende Bereiche an dem Trägerhandschuh oder dem mit der Grundschicht oder der Kontaktschicht beschichteten Trägerhandschuh beim Eintauchen auf den Inseln oder Erhöhungen aufliegen und nicht beschichtet werden. Solch eine handförmige Negativform ermöglicht ein gezieltes und räumlich definiertes Aufbringen der Schichtkonfigurationen und Funktionsbereiche bei hoher Wiederholgenauigkeit im Herstellungsprozess. Einmal ausgelegte Negativformen liefern konstant gleiche Beschichtungsmuster und sind ideal für standardisierte Zonenlayouts und hohe Stückzahlen. Außerdem muss in der Regel weniger Beschichtungsflüssigkeit bereitgestellt werden.

Eine Weiterbildung des Verfahrens oder des Sporthandschuhs sieht vor, dass die nicht mit der Grundschicht oder der Kontaktschicht zu beschichtenden Bereiche an dem Trägerhandschuh mittels einer Abdeckung oder Maske oder Schablone abgedeckt werden bzw. sind und somit nur die nicht abgedeckten Funktionsbereiche mit der Grundschicht bzw. Kontaktschicht beschichtet werden bzw. sind und dann die Abdeckung oder Maske oder Schablone wieder entfernt wird. Somit lassen sich die Funktionsbereiche hochpräzise und reproduzierbar abgrenzen.

Weiterhin kann für das Verfahren oder den Sporthandschuh vorgesehen sein, dass in einem dritten Beschichtungsschritt auf die Grundschicht und/oder auf die Kontaktschicht neuralgische Zonen erhöhter Verletzungsgefahr mit einer weiteren Schicht beschichtet werden bzw. sind durch Aufsprühen oder 3D-Bedrucken einer oder Eintauchen in eine dritte Beschichtungsflüssigkeit, wobei die neuralgischen Zonen zumindest den Daumenbereich und/oder den Kleiner-Finger-Bereich umfassen. Somit können hoch beanspruchte oder verletzungsanfällige Bereiche lokal verstärkt werden (z. B. Daumen und Kleiner Finger), ohne jedoch den gesamten Handschuh zu versteifen.

Ein nebengeordneter Aspekt der Erfindung betrifft einen Sporthandschuh, insbesondere Fußballtorwarthandschuh, der vorzugsweise mit dem vorstehend genannten Verfahren hergestellt ist. Der Sporthandschuh weist einen Innenhandbereich und einen Außenhandbereich auf und ist mit einem Daumenbereich, einem Zeigefingerbereich, einem Mittelfingerbereich, einem Ringfingerbereich und einem Kleiner-FingerBereich sowie einem Handtellerbereich und einem Handrückenbereich ausgebildet. An jedem Fingerbereich weist der Trägerhandschuh und/oder der Sporthandschuh für jedes der, von distal nach proximal gesehen, ersten bis dritten Fingerglieder jeweils einen zugehörigen ersten bis dritten inneren Fingergliedbereich und einen zugehörigen ersten bis dritten äußeren Fingergliedbereich und für jedes der, von distal nach proximal gesehen, ersten bis dritten Fingergelenke jeweils einen zugehörigen ersten bis dritten inneren Finger-Gelenkbereich und einen zugehörigen ersten bis dritten äußeren Fingergelenkbereich auf.

Der Sporthandschuh, insbesondere Fußballtorwarthandschuh, weist einen Trägerhandschuh, insbesondere aus einem textilen Material, auf, wobei der Innenhandbereich des Trägerhandschuhs vollständig oder im Wesentlichen vollständig sowie der Außenhandbereich des Trägerhandschuhs im Bereich der ersten äußeren Fingergliedbereiche zumindest teilweise mit einer Grundschicht beschichtet sind, die insbesondere dämpfende und/oder flüssigkeitsdichte Eigenschaften aufweist. Auf der Grundschicht und/oder auf freien, d.h. nicht mit der Grundschicht versehenen, Bereichen des Trägerhandschuhs sind Funktionsbereiche in einer vorgegebenen Konfiguration mit einer Kontaktschicht, insbesondere Ballkontaktschicht, beschichtet, wobei die Kontaktschicht insbesondere eine griffige Oberfläche aufweist, um das Fangen, Greifen und Festhalten des Balles zu unterstützen, und/oder eine dämpfende Oberfläche aufweist, um das Abwehren des Balles zu unterstützen.

Die vorgegebenen Funktionsbereiche umfassen zumindest teilweise die ersten inneren Fingergliedbereiche einer ausgewählten Mehrzahl von Fingerbereichen sowie wahlweise zumindest teilweise die ersten äußeren Fingergliedbereiche der ausgewählten Fingerbereiche kontinuierlich über die Fingerkuppen hinweg, zumindest teilweise den Handtellerbereich, oder zumindest teilweise die ersten äußeren Fingergliedbereiche der ausgewählten Fingerbereiche kontinuierlich über die Fingerkuppen hinweg und zumindest teilweise den Handtellerbereich.

Die Vorteile des Sporthandschuhs ergeben sich aus den vorstehenden Erläuterungen zum erfindungsgemäßen Verfahren.

Eine Weiterbildung des Verfahrens oder des Sporthandschuhs sieht vor, dass die Grundschicht vollständig auf dem Außenhandbereich aufgebracht wird bzw. ist. Die Fingeraußenseiten und der Handrücken sind somit ebenfalls durch die, beispielsweise abriebfeste, Grundschicht geschützt, was die Lebensdauer des Handschuhs erhöht. Auch ist eine definierte, gleichmäßige Dämpfungsbasis für außenliegende Funktionszonen beim Fausten bereitgestellt. Alternativ kann vorgesehen sein, dass die Grundschicht vollständig auf dem Außenhandbereich aufgebracht wird bzw. ist und die Kontaktschicht in den dritten äußeren Fingergliedbereichen und/oder in den zweiten äußeren Fingergelenkbereichen und/oder in den dritten äußeren Fingergelenkbereichen von Zeigefingerbereich, Mittelfingerbereich, Ringfingerbereich und Kleiner-Finger-Bereich und vorzugsweise auch Daumenbereich angeordnet wird bzw. ist. So kann eine gezielte Dämpfungswirkung beim Fausten erzeugt werden, insbesondere in den knöchelnahen Abwehrzonen.

Weiterhin kann für das Verfahren oder den Sporthandschuh vorgesehen sein, dass die Kontaktschicht zumindest teilweise auf jedem der ersten inneren Fingergliedbereichen aufgebracht wird bzw. ist, und dass die Kontaktschicht zumindest teilweise auf jedem der ersten äußeren Fingergliedbereichen aufgebracht wird bzw. ist. Somit ist maximale Griffigkeit in der Erstkontaktzone, den Fingerspitzen, beim Fangen vorgesehen. Die sogenannte "Wrap-around"-Wirkung über die Fingerkuppe hinweg verbessert die Kontrolle bei Roll-, Kipp- und Drehbewegungen des Balles, wodurch die Ballannahme sicherer und der Krafteinsatz geringer wird.

Gemäß einer Ausführungsform des Verfahrens oder des Sporthandschuhs wird bzw. ist die Kontaktschicht auf der Grundschicht auf dem Innenhandbereich und auf den ersten inneren Fingergliedbereiche aufgebracht, wobei die ersten bis dritten inneren Finger-Gelenkbereiche von Zeigefingerbereich, Mittelfingerbereich, Ringfingerbereich und Kleiner-Finger-Bereich und vorzugsweise auch zumindest die ersten und zweiten Finger-Gelenkbereiche des Daumenbereichs nicht mit der Kontaktschicht beschichtet sind oder nur mit der Grundschicht beschichtet sind oder eine freie externe Oberfläche des Trägerhandschuhs aufweisen. Die relevanten Greifflächen weisen somit eine hohe Griffigkeit auf bei gleichzeitig freibleibenden Gelenkzonen, so dass die Beweglichkeit der Finger verbessert ist.

Es kann für das Verfahren oder den Sporthandschuh vorgesehen sein, dass in neuralgischen Zonen erhöhter Verletzungsgefahr eine weitere Schicht aufgebracht wird bzw. ist, wobei die neuralgischen Zonen zumindest den Daumenbereich und/oder den Kleiner-Finger-Bereich umfassen. Die zielgerichtete Erhöhung von Steifigkeit des Handschuhs kann Verletzungen effektiv vorbeugen, ohne jedoch den gesamten Handschuh zu versteifen.

Die Grundschicht und/oder die Kontaktschicht des Sporthandschuhs, insbesondere Fußballtorwarthandschuhs, kann durch Aufsprühen oder 3D-Bedrucken einer oder Eintauchen in eine Beschichtungsflüssigkeit erzeugt sein, wobei die Kontaktschicht zumindest in dem Innenhandbereich aus einem Schaum auf Basis von Naturkautschuk gebildet ist und/oder eine griffige Oberfläche zum Fangen Greifen und Festhalten des Balles aufweist. Alternativ oder zusätzlich ist die Grundschicht aus einem Acrylnitril/Butadien-Elastomer (NBR) oder Acrylnitril/Butadien-Elastomer (NBR)-Schaum oder einem Urethankautschuk (PUR) oder Urethankautschuk (PUR)-Schaum oder einem Schaum auf Basis von Naturkautschuk, der vorzugsweise weichelastischer oder dämpfender ist als der Naturkautschukschaum der Kontaktschicht, gebildet. Die Kontaktschicht aus NR-Latexschaum bietet eine hohe Griffigkeit und gutes taktiles Feedback, auch bei wechselnden Bedingungen. Die Grundschicht aus NBR/PUR (oder NR-Schaum mit höherer Weichelastizität) bietet eine hohe Abriebfestigkeit sowie eine definierte Dämpfung.

Die Erfindung wird im Folgenden anhand von Ausführungsbeispielen weiter erläutert. Dabei wird auch auf die Zeichnungen Bezug genommen, in deren
FIG 1 eine Innenseite eines Torwarthandschuhs,
FIG 2 eine Außenseite eines Torwarthandschuhs,
FIG 3 ein Aufnehmen eines Trägerhandschuhs mittels einer Halteform,
FIG 4 das Beschichten des Trägerhandschuhs in einem Tauchbad,
FIG 5 ein Ausschnitt eines beschichteten Trägerhandschuhs,
FIG 6 ein Ausschnitt eines ein zweites Mal beschichteten Trägerhandschuhs
FIG 7 eine erste Ausführungsform eines mehrlagigen Innenhandteils in einem Querschnitt entlang der in FIG 2 mit III-III bezeichneten Schnittlinie und
FIG 8 eine zweite Ausführungsform eines mehrlagigen Innenhandteils in einem Querschnitt entlang der in FIG 2 mit III-III bezeichneten Schnittlinie,
FIG 9 eine erste Konfiguration von Funktionsbereichen oder -zonen an der Innenhand eines Fußballtorwarthandschuhs,
FIG 10 eine zweite Konfiguration von Funktionsbereichen oder -zonen an der Innenhand eines Fußballtorwarthandschuhs,
FIG 11 eine erste Konfiguration von Funktionsbereichen oder -zonen an der Außenhand eines Fußballtorwarthandschuhs,
FIG 12 eine zweite Konfiguration von Funktionsbereichen oder -zonen an der Außenhand eines Fußballtorwarthandschuhs,
FIG 13 eine dritte Konfiguration von Funktionsbereichen oder -zonen an der Außenhand eines Fußballtorwarthandschuhs,
FIG 14 eine dritte Konfiguration von Funktionsbereichen oder -zonen an der Innenhand eines Fußballtorwarthandschuhs,
FIG 15 eine vierte Konfiguration von Funktionsbereichen oder -zonen an der Außenhand eines Fußballtorwarthandschuhs,
FIG 16 eine vierte Konfiguration von Funktionsbereichen oder -zonen an der Innenhand eines Fußballtorwarthandschuhs,
FIG 17 eine fünfte Konfiguration von Funktionsbereichen oder -zonen an der Außenhand eines Fußballtorwarthandschuhs,
FIG 18 eine fünfte Konfiguration von Funktionsbereichen oder -zonen an der Innenhand eines Fußballtorwarthandschuhs,
FIG 19 eine sechste Konfiguration von Funktionsbereichen oder -zonen an der Außenhand eines Fußballtorwarthandschuhs,
FIG 20 eine sechste Konfiguration von Funktionsbereichen oder -zonen an der Innenhand eines Fußballtorwarthandschuhs,
FIG 21 eine siebte Konfiguration von Funktionsbereichen oder -zonen an der Außenhand eines Fußballtorwarthandschuhs,
FIG 22 eine siebte Konfiguration von Funktionsbereichen oder -zonen an der Innenhand eines Fußballtorwarthandschuhs,
FIG 23 eine achte Konfiguration von Funktionsbereichen oder -zonen an der Außenhand eines Fußballtorwarthandschuhs,
FIG 24 eine achte Konfiguration von Funktionsbereichen oder -zonen an der Innenhand eines Fußballtorwarthandschuhs,
FIG 25 eine neunte Konfiguration von Funktionsbereichen oder -zonen an der Außenhand eines Fußballtorwarthandschuhs,
FIG 26 eine neunte Konfiguration von Funktionsbereichen oder -zonen an der Innenhand eines Fußballtorwarthandschuhs,
FIG 27 eine zehnte Konfiguration von Funktionsbereichen oder -zonen an der Außenhand eines Fußballtorwarthandschuhs,
FIG 28 eine zehnte Konfiguration von Funktionsbereichen oder -zonen an der Innenhand eines Fußballtorwarthandschuhs,
FIG 29 eine handförmige Negativform zum Beschichten des Handschuhs und
FIG 30 eine Schnittdarstellung der handförmigen Negativform

jeweils schematisch dargestellt sind. Einander entsprechende Teile und Größen sind in den Figuren mit denselben Bezugszeichen versehen.

Im Allgemeinen weist der Torwarthandschuh einen an der Innenseite vorgesehenen Innenhandbereich (oder: Innenhandteil) IH und einen gegenüberliegend an der Außenseite vorgesehenen Außenhandbereich (oder: Außenhandteil) AH auf sowie gegebenenfalls zusätzlich - in den Figuren nicht dargestellte oder sichtbare - Zwischenbereiche wie z.B. Zwickel oder Schichtel zwischen Innenhandbereich IH und Außenhandbereich AH.

Der Torwarthandschuh hat darüber hinaus verschiedene funktionale Teilbereiche oder Funktionsbereiche oder Funktionszonen, die unterschiedliche Funktionen beim Behandeln des Balles, insbesondere Fußballes, durch den Torwart erfüllen, wenn dessen Hand sich in dem Torwarthandschuh befindet oder von dem Torwarthandschuh bekleidet oder umgeben wird. Diese funktionalen Teilbereiche sollen zumindest teilweise mit wenigstens einer Funktionsbeschichtung versehen werden, die den Torwart bei der Ballbehandlung unterstützt.

So ist der an der Innenseite vorgesehene Innenhandbereich IH des Torwarthandschuhs zumindest in funktionalen Teilbereichen vornehmlich zum Greifen, Fangen oder Aufnehmen des Balles vorgesehen, wobei die Finger der Torwarthand entsprechend zur Innenseite hin gebeugt werden und der Torwarthandschuh dieser Beugung der Finger folgen soll. Die Funktionsbeschichtung an funktionalen Teilbereichen des Innenhandbereichs IH des Torwarthandschuhs soll nun im Allgemeinen die Greiffunktion mit einer hohen Griffigkeit an der Außenoberfläche, die eine Ballkontaktfläche bildet, aufweisen, vorzugsweise kombiniert mit einer gewissen Dämpfungsfunktion.

Zumindest Teilbereiche des Außenhandbereichs AH der Torwarthandschuh, welche den Handrücken und die Außenseiten der Finger bedecken, kommen vornehmlich beim Fausten oder generell blockenden oder schlagenden Abwehren des Balles zum Einsatz. Bei dieser Ballabwehr werden die Finger in der Regel noch stärker gebeugt als beim Fangen oder Aufnehmen, meist zu einer Faust, und vor allem die Außenbereiche der einzelnen Finger, vor allem die unteren Fingerglieder mit den anschließenden Fingergelenken oder Fingerknöcheln und gegebenenfalls das den Handrückenbereich überdeckenden Außenhandbereich üben dabei eine Kraft auf den Ball aus. Die Funktionsbeschichtung an funktionalen Teilbereichen des Außenhandteils AH soll deshalb bevorzugt eine Dämpfungsfunktion und/oder eine Elastizität aufweisen, um die Kontrolle bei der Ballabwehr zu verbessern.

Im Allgemeinen weist der Torwarthandschuh Teilbereiche an den Fingerbereichen (Z, M, R, K, D), die die Fingerglieder und Fingergelenke (oder Fingerknöchel) abbilden, und Teilbereiche an dem Handtellerbereich und an dem Handrückenbereich auf.

An jedem Finger sind an dem Innenhandbereich IH und an dem Außenhandbereich AH entsprechend der Zahl der Fingerglieder jeweils drei Fingergliedbereiche, nämlich Fingerinnenbereiche (oder: innere Fingergliedbereiche) an dem Innenhandbereich IH und Fingeraußenbereiche (oder: äußere Fingergliedbereiche) an dem Außenhandteil AH, vorgesehen und entsprechend der Zahl der Fingergelenke jeweils drei Fingergelenkbereiche (oder: Fingerübergangsbereiche), nämlich innere Fingergelenkbereiche an dem Innenhandbereich IH und äußere Fingergelenkbereiche an dem Außenhandteil AH. Diese sind nachfolgend in der Reihenfolge von distal nach proximal gesehen mit erster, zweiter und dritter bezeichnet.

In einem zur Aufnahme des Zeigefingers der Hand dienenden Zeigefingerbereich Z des Torwarthandschuh ist zunächst das äußerste (distale) oder erste Zeigefingerglied (das mit dem Fingernagel) des Zeigefingers von einem ersten inneren Zeigefinger-Gliedbereich Z1 an der Innenseite und einem ersten äußeren Zeigefinger-Gliedbereich Z4 an der Rückseite oder Außenseite abgedeckt. Das mittlere oder zweite Zeigefingerglied des Zeigefingers ist von einem zweiten inneren Zeigefinger-Gliedbereich Z2 an der Innenseite und einem zweiten äußeren Zeigefinger-Gliedbereich Z5 an der Rückseite oder Außenseite abgedeckt. Das innerste (proximale) oder dritte Zeigefingerglied des Zeigefingers ist von einem dritten innerer Zeigefinger-Gliedbereich Z3 an der Innenseite und einem dritten äußeren Zeigefinger-Gliedbereich Z6 an der Rückseite oder Außenseite abgedeckt.

Der erste innere Zeigefinger-Gliedbereich Z1 geht in den zweiten inneren Zeigefinger-Gliedbereich Z2 über einen dazwischen liegenden ersten inneren Zeigefinger-Gelenkbereich ZU1 über, welcher das erste oder äußerste Zeigefingergelenk (oder Zeigefingerknöchel) überdeckt. Der zweite innere Zeigefinger-Gliedbereich Z2 geht in den dritten inneren Zeigefinger-Gliedbereich Z3 über einen dazwischen liegenden zweiten inneren Zeigefinger-Gelenkbereich ZU2 über, welcher das zweite oder mittlere Zeigefingergelenk (oder Zeigefingerknöchel) überdeckt.

Analog zu dieser Anordnung an der Innenseite geht auch an der Außenseite des Zeigefingerbereichs des Torwarthandschuhs der erste äußere Zeigefinger-Gliedbereich Z4 über einen das erste Zeigefingergelenk überdeckenden ersten äußeren Zeigefinger-Gelenkbereich ZU4 in den zweiten äußeren Zeigefinger-Gliedbereich Z5 über. Der zweite äußere Zeigefinger-Gliedbereich Z5 wiederum geht über einen das zweite Zeigefingergelenk überdeckenden zweiten äußeren Zeigefinger-Gelenkbereich ZU5 in den zweiten äußeren Zeigefinger-Gliedbereich Z5 über.

Der dritte innere Zeigefinger-Gliedbereich Z3 geht nun über einen das proximale dritte Zeigefingerglied überdeckenden dritten inneren Zeigefinger-Gelenkbereich ZU3 in einen über dem Handteller angeordneten Handtellerbereich IH1 des Innenhandbereichs IH über. An der Außenseite geht der dritte äußere Zeigefinger-Gliedbereich Z6 über einen das proximale dritte Zeigefingerglied außen überdeckenden dritten äußeren Zeigefinger-Gelenkbereich ZU3 in einen über dem Handrücken angeordneten Handrückenbereich AH1 des Außenhandbereichs AH über.

In analoger Weise werden die drei Fingerglieder der anderen Finger, nämlich des Mittelfingers, des Ringfingers und des kleinen Fingers sowie des Daumens mit entsprechenden Finger-Innenbereichen und Finger-Außenbereichen des Torwarthandschuhs abgedeckt, welche wiederum die Fingergelenke jeweils mit überdecken.

Analog zum Zeigefingerbereich Z ist auch am Mittelfingerbereich M des Torwarthandschuhs zur Aufnahme des Mittelfingers der Hand an der Innenseite zunächst ein erster innerer Mittelfinger-Gliedbereich M1 an dem ersten oder äußersten Mittelfingerglied und ein zweiter innerer Mittelfinger-Gliedbereich M2 an dem mittleren Mittelfingerglied mit einem dazwischen liegenden ersten inneren Mittelfinger-Gelenkbereich MU1 an dem ersten Mittelfingergelenk vorgesehen. Zwischen dem zweiten inneren Mittelfinger-Gliedbereich M2 und einem das innere dritte Mittelfingerglied überdeckenden dritten inneren Mittelfinger-Gliedbereich M3 ist ein zweiter innerer Mittelfinger-Gelenkbereich MU2 angeordnet zum Überdecken des zweiten Mittelfingergelenks an der Innenseite. Der dritte innere Mittelfinger-Gliedbereich M3 geht in den Innenhandbereich IH über einen dritten inneren Mittelfinger-Gelenkbereich MU3, der das dritte oder proximale Mittelfingergelenk an der Innenseite überdeckt, über. An der Außenseite des Mittelfingerbereichs ist analog zum Zeigefingerbereich entsprechend von außen nach innen oder von distal nach proximal hintereinander ein erster äußerer Mittelfinger-Gliedbereich M4 (am ersten Mittelfingerglied), ein erster äußerer Mittelfinger-Gelenkbereich MU4 (am ersten Mittelfingergelenk), ein zweiter äußerer Mittelfinger-Gliedbereich M5 (am zweiten Mittelfingerglied), im Anschluss ein zweiter äußerer Mittelfinger-Gelenkbereich MU5 (am zweiten Mittelfingergelenk) und sodann ein dritter äußerer Mittelfinger-Gliedbereich M6 (am dritten Mittelfingerglied) und im Anschluss und im Übergang zum Außenhandbereich AH ein dritter äußerer Mittelfinger-Gelenkbereich MU3 (am dritten Mittelfingergelenk) vorgesehen oder angeordnet.

Auch am Ringfingerbereich R des Torwarthandschuhs zur Aufnahme des Ringfingers der Hand ist (wie im Zeigefingerbereich Z und im Mittelfingerbereich M) an der Innenseite zunächst ein erster innerer Ringfinger-Gliedbereich R1 an dem ersten oder äußersten Ringfingerglied und ein zweiter innerer Ringfinger-Gliedbereich R2 an dem mittleren Ringfingerglied mit einem dazwischen liegenden ersten inneren Ringfinger-Gelenkbereich RU1 an dem ersten Ringfingergelenk angeordnet. Zwischen dem zweiten inneren Ringfinger-Gliedbereich R2 und einem das innere oder proximale dritte Ringfingerglied überdeckenden dritten inneren Ringfinger-Gliedbereich R3 ist ein zweiter innerer Ringfinger-Gelenkbereich RU2 angeordnet zum Überdecken des zweiten Ringfingergelenks an der Innenseite. Der dritte innere Ringfinger-Gliedbereich R3 geht in den Innenhandbereich IH über einen dritten inneren Ringfinger-Gelenkbereich RU3 über, welcher das dritte oder proximale Ringfingergelenk an der Innenseite abdeckt. An der Außenseite des Ringfingerbereichs ist analog zum Zeigefingerbereich entsprechend von außen nach innen oder von distal nach proximal hintereinander ein erster äußerer Ringfinger-Gliedbereich R4 (am ersten Ringfingerglied), ein erster äußerer Ringfinger-Gelenkbereich RU4 (am ersten Ringfingergelenk), ein zweiter äußerer Ringfinger-Gliedbereich R5 (am zweiten Ringfingerglied), im Anschluss ein zweiter äußerer Ringfinger-Gelenkbereich RU5 (am zweiten Ringfingergelenk) und sodann ein dritter äußerer Ringfinger-Gliedbereich R6 (am dritten Ringfingerglied) und im Anschluss und im Übergang zum Außenhandbereich AH ein dritter äußerer Ringfinger-Gelenkbereich RU3 (am dritten Ringfingergelenk) vorgesehen oder angeordnet.

Am Kleiner-Finger-Bereich K des Torwarthandschuhs zur Aufnahme des kleinen Fingers der Hand ist an der Innenseite zunächst ein erster innerer Kleiner-FingerGliedbereich K1 an dem ersten oder distalen (äußersten) Kleiner-Finger-Glied und ein zweiter innerer Kleiner-Finger-Gliedbereich K2 an dem mittleren Kleiner-Finger-Glied mit einem dazwischen liegenden ersten inneren Kleiner-Finger-Gelenkbereich KU1 an dem ersten Kleiner-Finger-Gelenk vorgesehen. Zwischen dem zweiten inneren Kleiner-Finger-Gliedbereich K2 und einem das innere dritte Kleiner-Finger-Glied überdeckenden dritten inneren Kleiner-Finger-Gliedbereich K3 ist ein zweiter innerer Kleiner-Finger-Gelenkbereich KU2 angeordnet zum Überdecken des zweiten Kleiner-Finger-Gelenks an der Innenseite. Der dritte innere Kleiner-Finger-Gliedbereich K3 geht in den Innenhandbereich IH über einen dritten inneren Kleiner-Finger-Gelenkbereich KU3, der das dritte oder proximale Kleiner-Finger-Gelenk an der Innenseite überdeckt, über. An der Außenseite des Kleiner-Finger-Bereichs ist entsprechend von außen nach innen oder von distal nach proximal hintereinander ein erster äußerer Kleiner-Finger-Gliedbereich K4 (am ersten Kleiner-Finger-Glied), ein erster äußerer Kleiner-Finger-Gelenkbereich KU4 (am ersten Kleiner-Finger-Gelenk), ein zweiter äußerer Kleiner-Finger-Gliedbereich K5 (am zweiten Kleiner-Finger-Glied), im Anschluss ein zweiter äußerer Kleiner-Finger-Gelenkbereich KU5 (am zweiten Kleiner-Finger-Gelenk) und sodann ein dritter äußerer Kleiner-Finger-Gliedbereich K6 (am dritten Kleiner-Finger-Glied) und im Anschluss und im Übergang zum Außenhandbereich AH ein dritter äußerer Kleiner-Finger-Gelenkbereich KU3 (am dritten Kleiner-Finger-Gelenk) vorgesehen oder angeordnet.

Auch am Daumenbereich D des Torwarthandschuhs zur Aufnahme des Daumens der Hand an der Innenseite zunächst ein erster innerer Daumen-Gliedbereich D1 an dem ersten oder distalen Daumenglied und ein zweiter innerer Daumen-Gliedbereich D2 an dem mittleren Daumenglied mit einem dazwischen liegenden ersten inneren Daumen-Gelenkbereich DU1 an dem ersten Daumengelenk vorgesehen. Zwischen dem zweiten inneren Daumen-Gliedbereich D2 und einem das proximale oder dritte Daumenglied überdeckenden dritten inneren Daumen-Gliedbereich D3 ist ein zweiter innerer Daumen-Gelenkbereich DU2 angeordnet zum Überdecken des zweiten Daumengelenks an der Innenseite. Der dritte innere Daumen-Gliedbereich D3 geht in den Innenhandbereich IH über einen dritten inneren Daumen-Gelenkbereich DU3, der das dritte oder proximale Daumengelenk an der Innenseite überdeckt, über. An der Außenseite des Daumenbereichs ist analog zum Zeigefingerbereich entsprechend von außen nach innen oder von distal nach proximal hintereinander ein erster äußerer Daumen-Gliedbereich D4 (am ersten Daumenglied), ein erster äußerer Daumen-Gelenkbereich DU4 (am ersten Daumengelenk), ein zweiter äußerer Daumen-Gliedbereich D5 (am zweiten Daumenglied), im Anschluss ein zweiter äußerer Daumen-Gelenkbereich DU5 (am zweiten Daumengelenk) und sodann ein dritter äußerer Daumen-Gliedbereich D6 (am dritten Daumenglied) und im Anschluss und im Übergang zum Außenhandbereich AH ein dritter äußerer Daumen-Gelenkbereich DU3 (am dritten Daumengelenk) vorgesehen oder angeordnet.

Es werden nun in verschiedenen Varianten und Ausführungsformen in unterschiedliche dieser genannten Teilbereiche von Innenhandbereich IH und/oder Außenhandbereich AH des Torwarthandschuhs selektiv verschiedene Konfigurationen von Funktionsbeschichtungen oder Funktionsschichten oder Funktionslagen in entsprechenden Funktionsbereichen aufgebracht.

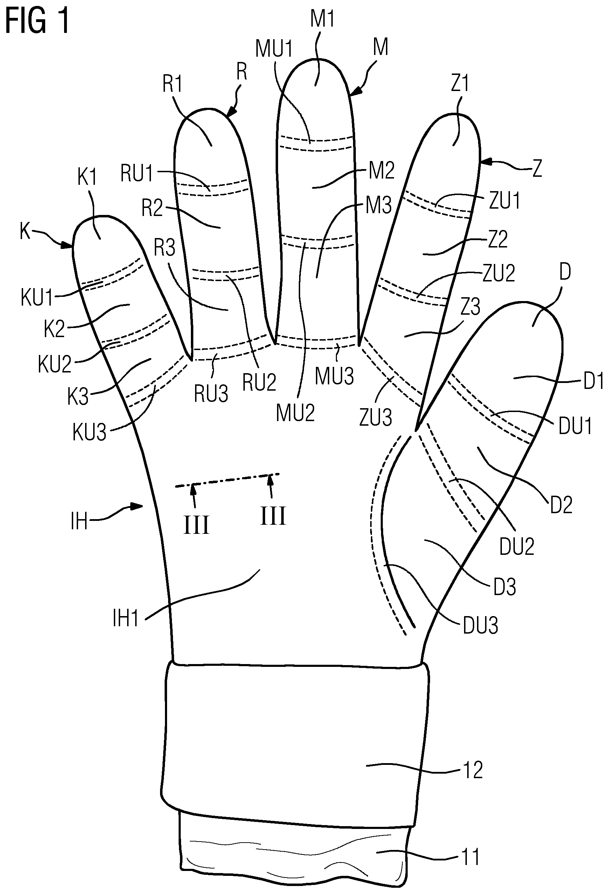

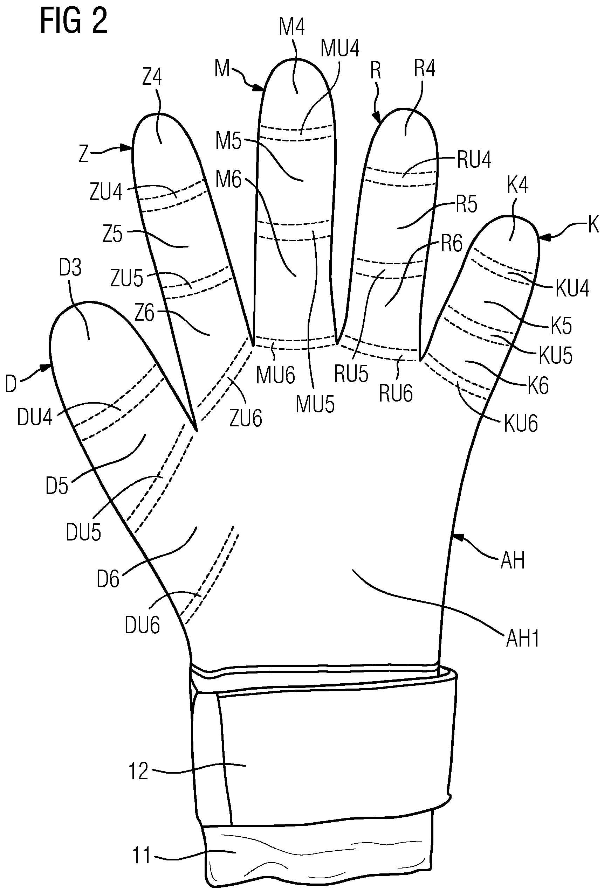

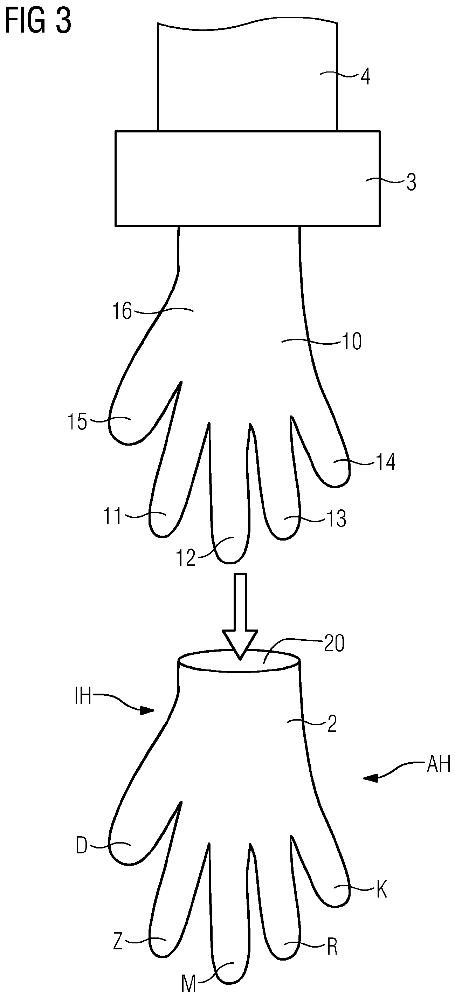

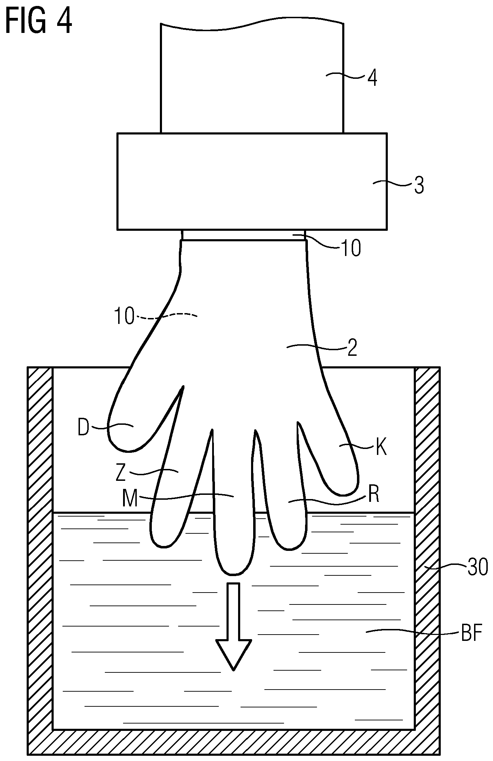

Dazu wird in vorteilhaften Ausführungsformen zunächst ein Trägerhandschuh 2 bereitgestellt, der bereits eine die Hand des Torwarts komplett umschließende oder einkleidende Form aufweist mit Fingerbereichen Z, M, R, K und D und Handtellerbereich IH1 und Handrückenbereich AH1, wie in FIG 3 und 4 dargestellt und entsprechend in den FIG 1 und 2 gezeigt. Der Trägerhandschuh 2 hat nur im Handgelenkbereich eine Öffnung 20, in die die Hand des Torwarts in üblicher Weise eingeführt werden kann, auch wenn der auf dem Trägerhandschuh 2 basierende Torwarthandschuh fertiggestellt ist, und ist ansonsten geschlossen. Somit weist der Trägerhandschuh 2 eine kontinuierliche, bis auf die Öffnung 20 geschlossenen externe Oberfläche 21 auf, die insbesondere die externen Oberflächen der Fingerbereiche Z, M, R, K und D und den Handtellerbereich IH1 und den Handrückenbereich AH1 (und ggf. Zwischen- und Zwickelbereiche) umfasst und bis zur Öffnung 20 verläuft. Entsprechend weist der Trägerhandschuh 2 eine entsprechende kontinuierliche der Hand zugewandte und von der externen Oberfläche 21 abgewandte interne Oberfläche (nicht sichtbar und ohne Bezugszeichen) auf, die ebenfalls intern oder im Inneren des Handschuhs den Fingerbereichen Z, M, R, K und D und dem Handtellerbereich IH1 und Handrückenbereich AH1 folgt oder angepasst ist.

Der Trägerhandschuh 2 ist vorzugsweise zumindest überwiegend, bevorzugt vollständig, aus textilem Material gebildet, das insbesondere aus einem oder mehreren Textilfäden oder Textilfasern durch Weben oder Stricken oder Kleben hergestellt ist (z.B. als Gestrick, Gewebe, Vlies oder ähnliches) und eine bestimmte Flexibilität und Elastizität aufweist. Zwischen den Fäden oder Teilbereichen eines solchen Textils sind in der Regel kleine Zwischenräume oder Maschen oder Öffnungen gebildet, die eine gewisse elastische Dehnfähigkeit erlauben, welche durch Verwendung elastischer Fäden oder Fasern noch erhöht werden kann. Wenn der Trägerhandschuh 2 als ein Futter dient und seine der Hand zugewandte interne Oberfläche somit in Kontakt mit der Haut der Torwarthand tritt, wird dadurch eine gewisse Atmungsaktivität oder Aufnahmefähigkeit gegenüber Schweißbildung ermöglicht und der Tragkomfort erhöht.

Der Trägerhandschuh 2 ist bevorzugt einstückig oder einteilig oder aus einem zusammenhängenden Textilteil oder Textilmaterial gebildet. Der Trägerhandschuh kann aber auch aus mehreren miteinander verbundenen, insbesondere vernähten oder verklebten Textilteilen gefertigt sein. Die Dicke des Materials des Trägerhandschuhs 2 oder der Abstand zwischen externer Oberfläche 21 und interner Oberfläche ist vorzugsweise wenigstens annähernd konstant und/oder aus einem Intervall von 0,7 mm bis 5 mm gewählt.

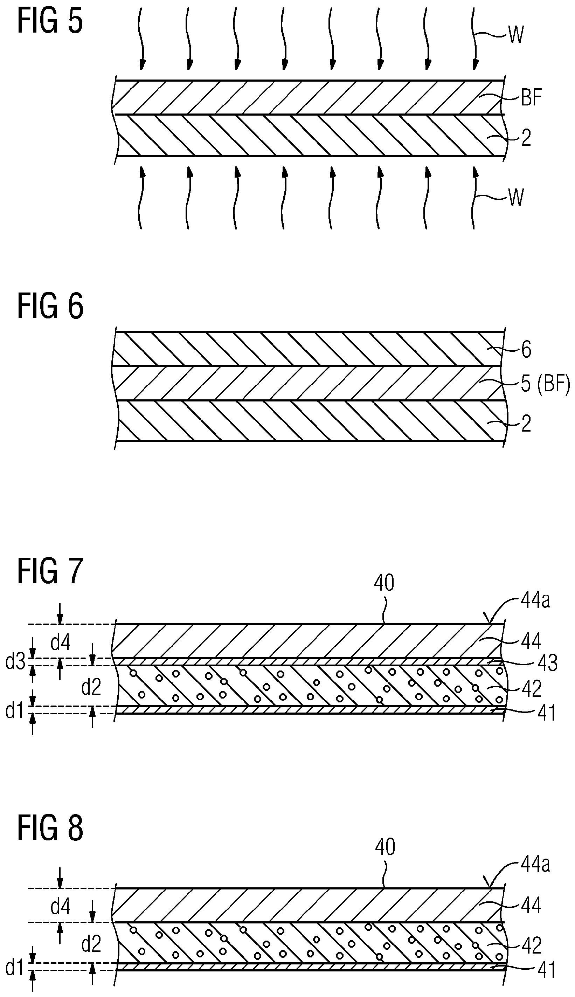

In einem ersten Beschichtungsschritt wird nun der Trägerhandschuh 2 vollständig oder über seine gesamte freie externe Oberfläche 21 mit einer Grundschicht 5 (siehe FIG 6) beschichtet, vorzugsweise durch einen Eintauchprozess in eine Beschichtungsflüssigkeit BF oder durch einen Sprühprozess oder durch Besprühen mit einer Beschichtungsflüssigkeit BF. Die Grundschicht 5 überdeckt nun vorzugsweise etwaige Vorsprünge oder Nähte des Trägerhandschuhs 2 und bildet eine ausgleichende Oberfläche.

Die Beschichtungsflüssigkeit BF kann dabei je nach Polymerisationsgrad oder Materialeigenschaften allgemein unterschiedliche Viskositäten und Fließfähigkeit und Benetzungseigenschaften aufweisen.

Als Beschichtungsflüssigkeit BF wird oder werden vorzugsweise Naturkautschuk(en) und/oder Synthesekautschuk(en) und bevorzugt Schäume daraus vorgesehen, die in flüssiger oder viskoser Form im Allgemeinen in Form linearer Polymere oder Kettenpolymere vorliegen und dann *in situ* nach dem Aufbringen auf den Trägerhandschuh 2 durch Vulkanisation weitmaschig vernetzt werden und dadurch weichelastische Eigenschaften erhalten. Es können sowohl gesättigte (insbesondere sogenannte M-Elastomere) oder ungesättigte (sogenannte R-Elastomere) Synthesekautschuke und Elastomere zum Einsatz kommen.

Ein geeignetes elastisches Material für die Grundschicht 5 ist ein Siloxan-Elastomer (SI), insbesondere in Form eines Schaumes, das im Allgemeinen aus vernetzten Polysiloxanen oder Polysiloxanverbindungen aufgebaut ist, und insbesondere ein Siloxankautschuk (SIR, Siloxangummi) oder Silikon sein. Ein Siloxankautschuk ist im Allgemeinen aus vernetzten hochmolekularen Polydimethylsiloxanen gebildet (Q), wobei ein Teil der Methylgruppen durch Phenylgruppen (PMQ) oder Vinylgruppen (VMQ) ersetzt sein kann. Die Vulkanisation kann insbesondere durch Heißvernetzung, insbesondere mit Peroxiden, oder Kaltvernetzung, insbesondere mit Platinverbindungen, organischen Zinnverbindungen oder Aminen, erfolgen.

Als Synthesekautschuke für die Grundschicht 5 und die Beschichtungsflüssigkeit BF können ferner ohne Beschränkung der Allgemeinheit auch die folgenden Elastomere und Elastomer-Verbunde (Compounds) und Schäume daraus verwendet werden:
Butadien-Elastomere (BR),
Styrol/Butadien-Elastomere (SBR),
Acrylnitril/Butadien-Elastomere (NBR),
Isopren-Elastomere (IR, NR)
Isopren/Isobuthylen-Copolymere (Butylkautschuk)
Vinylelastomere, insbesondere Ethylen-Propylen-Copolymere (EPDM, EPM), Ethylen-Vinylacetat-Copolymere (EVAC), Acrylkautschuk (ACM), Polyisobuthylen (PIB), Urethankautschuk (PUR)
oder thermoplastische Elastomere (TPE).

Bevorzugt sind NBR und PUR oder SI oder ein Naturkautschuk oder Latexmaterial.

In einer bevorzugten Ausführungsform besteht die Beschichtungsflüssigkeit BF zumindest überwiegend aus einer Kautschukemulsion (oder Dispersion), die entweder aus natürlichem Kautschuk oder Latex im Allgemeinen aus Hevea gewonnen ist oder auch synthetisch hergestellt ist und chemisch durch Isopren-Polymer, das üblicherweise in einem Kolloid vorliegt, gekennzeichnet ist. Die Kautschukemulsion für die Beschichtungsflüssigkeit kann je nach gewünschten Eigenschaften und Porenstruktur der Grundschicht 5 auch in Form eines Schaumes oder in aufgeschäumter Form mit Lufteinschlüssen oder Poren vorliegen.

Außerdem enthält die Beschichtungsflüssigkeit BF, insbesondere die Kautschukemulsion, vorzugsweise auch Vulkanisationszusätze oder Vulkanisationsadditive wie beispielsweise, wie an sich bekannt, Schwefel oder Peroxide oder Metalloxide oder gegebenenfalls andere Zusätze wie Farbstoffe.

In einer vorteilhaften Ausführungsform wird, wie in FIG 3 gezeigt, der Trägerhandschuh 2 zunächst von einer Halteform 10 ergriffen oder auf diese gezogen (quasi "angezogen") und vorzugsweise während des gesamten Beschichtungsverfahrens gehalten. Die Halteform 10 ist in ihrer Außenform an die Handform des Trägerhandschuhs 2 angepasst und wird wie eine echte Hand durch die Öffnung 20 des Trägerhandschuhs 2 in den Trägerhandschuh 2 entlang des in FIG 3 dargestellten Pfeiles eingeführt und kommt dann mit der internen Oberfläche des Trägerhandschuhs 2 in Kontakt oder liegt an dieser an.

Die Halteform 10 ist bevorzugt einer an den Trägerhandschuh 2 und/oder die Hand des Torwarts, die beispielsweise zu diesem Zweck für eine individuelle Anpassung optisch 3D abgescannt worden sein kann, angepassten Hand oder zumindest einem Handtorso nachgebildet. Fingerelemente der Halteform 10 ragen in die entsprechenden Fingerbereiche des Trägerhandschuhs 2 und füllen diese von innen oder intern aus oder drücken von innen gegen die interne Oberfläche des Trägerhandschuhs 2, nämlich ein Zeigefingerelement 11 in den Zeigefingerbereich Z, ein Mittelfingerelement 12 in den Mittelfingerbereich M, ein Ringfingerelement 13 in den Ringfingerbereich R und ein Kleiner-Finger-Element 14 in den Kleiner-Finger-Bereich K sowie ein Daumenelement 15 in den Daumenbereich D. Die interne Oberfläche des Trägerhandschuhs 2 kann im Handtellerbereich IH1 und im Handrückenbereich AH1 gegebenenfalls wenigstens teilweise etwas beabstandet sein von der Außenfläche der Halteform 10, aber auch dort anliegen.

Der Rand der Öffnung 20 des Trägerhandschuhs 2 kommt am Ende der Einführbewegung an einem Handgelenkbereich 16 der Halteform 10 mit der Außenfläche der Halteform 10 in Anlage. Dies bewirkt eine Abdichtung der Öffnung 20 gegen ein Eindringen von Beschichtungsmaterial in den Hohlraum des Trägerhandschuhs 2 in späteren Verfahrensschritten. Durch diese Anpassung der Außengestalt der Halteform 10 and den Trägerhandschuh 2 ist ein Formschluss oder vorzugsweise auch zusätzlich aufgrund einer elastischen Aufdehnung des Textilmaterials teilweise ein Kraftschluss erreicht, der ein Abziehen oder Verrutschen des "angezogenen" Trägerhandschuhs 2 von der Halteform 10 verhindert.

Sollte ein Textilmaterial für den Trägerhandschuh 2 verwendet werden, das im Handgelenkbereich bei der Öffnung 20 nicht ausreichend elastisch ist, um ein Einführen des breiteren Bereichs der Halteform 10 mit den Fingerbereichen zu ermöglichen, so kann beispielsweise ein Schwenkmechanismus zum Einschwenken des Daumenelements 15 der Halteform 10 unter den Handtellerbereich für das Einführen in den Trägerhandschuh 2 und anschließendes Ausschwenken für das Beschichtungsverfahren vorgesehen sein. Ferner kann auch zu diesem Zweck ein Bewegungsmechanismus mit Antrieben zum Zusammenführen und Spreizen wenigstens eines Teils der Fingerelemente 11 bis 15 vorgesehen sein oder eine analog zu einer menschlichen Hand bewegliche Roboterhand eines humanoiden Roboters, wobei die Bewegung einer menschlichen Hand beim Anziehen eines Handschuhs von der Roboterhand nachgeahmt werden kann oder wird. Die gleichen Maßnahmen werden auch beim Aus- oder Abziehen des fertigen beschichteten Handschuhs von der Halteform 10 in umgekehrter Reihenfolge vorgesehen.

In einer bevorzugten automatisierten Ausführungsform transportiert ein Roboter 4 (oder ein Manipulator), vorzugsweise ein Industrieroboter oder humanoider Roboter, die an einem Roboterkopf 3 des Roboters 4 befestigte Halteform 10 oder eine Vielzahl von nebeneinander angeordneten Halteformen mit jeweils dem darauf befindlichen Trägerhandschuh 2 durch die verschiedenen Beschichtungsschritte oder Stationen.

Es ist aber anstelle von Robotern auch ein Endlostransportmechanismus, beispielsweise mit einem Transportseil oder -kette und Transportrollen und Umlenkrollen und Absenk- und Anhebmechanismen, möglich, an dem eine Vielzahl von Halteformen befestigt und kontinuierlich umlaufend durch den Herstellprozess geführt werden und an einer Bestückungsstation mit Trägerhandschuhen bestückt werden und an einer Entnahmestation die fertig beschichteten Handschuhe dann von den Halteformen entnommen oder ausgezogen werden.

Der Trägerhandschuh 2 kann in der Fertigung von Menschen auf die zugehörige Halteform 10 gezogen oder auch wieder abgezogen werden. Ferner kann auch ein weiteres Handhabungsgerät, ggf. ein zweiter Roboter (nicht dargestellt), zum Aufziehen auf die Halteform 10 den Trägerhandschuh 2, in der Regel unter Spreizung an der Öffnung 20, handhaben oder halten und der Roboter 4 bewegt die Halteform 10 in den Trägerhandschuh 2 oder das Handhabungsgerät bzw. der Roboter zieht den Trägerhandschuh auf eine zugehörige Halteform einer Vielzahl von Halteformen an einer Transporteinrichtung, insbesondere Manipulator oder Endlostransporteinrichtung, auf.

Nun wird der auf die Halteform 10 aufgezogene Trägerhandschuh 2, insbesondere von dem Roboter 4, zu einem Tauchbad 22 transportiert und zumindest teilweise, vorzugsweise aber praktisch vollständig in die darin befindliche Beschichtungsflüssigkeit BF getaucht. Dies ist in FIG 4 veranschaulicht.

Vorzugsweise stützt die Halteform 10 den zu beschichtenden Trägerhandschuh 2 von innen großflächig ab, d.h. der Trägerhandschuh liegt mit seiner internen Oberfläche weitgehend oder vollständig an der externen Fläche der Handform an. Dadurch wird auch die zu beschichtende externe Oberfläche 21 des Trägerhandschuhs 2 in ihrer Gestalt räumlich stabil gehalten. Es bildet sich dadurch in dem Tauchbad 22 eine gleichmäßige und homogene Schicht aus Beschichtungsflüssigkeit BF, die an dem Textilmaterial des Trägerhandschuhs 2 an dessen externer Oberfläche 21 anhaftet und die zwar eventuell tiefer in die Textilschicht eindringen kann, jedoch an einem weiteren Eindringen in den Hohlraum des Trägerhandschuhs 2 durch die intern an der Textilschicht anliegende Außenfläche der Halteform 10 gehindert wird.

Die durch Adhäsion und ggf. Koagulation anhaftende Schicht aus der Beschichtungsflüssigkeit BF wird nun bevorzugt durch einen Vulkanisationsprozess gefestigt und fertiggestellt. Dazu wird in einem nächsten Verfahrensschritt oder Vulkanisationsschrit die noch viskose, ggf. koagulierte, Schicht aus der Beschichtungsflüssigkeit BF, insbesondere der Kautschuk- oder Latexemulsion, vulkanisiert. Beim Vulkanisieren oder der Vulkanisation wird der Kautschuk weitmaschig chemisch vernetzt und erhält so eine gewünschte Elastizität. Im vorliegenden Verfahren wird bevorzugt eine thermische Vulkanisation durchgeführt durch Zuführen von Wärme W mittels heißem Medium, insbesondere heißem Wasserdampf oder Heißluft, welches über die aufgebrachte Schicht der Beschichtungsflüssigkeit BF geleitet wird oder strömt. Dieser Verfahrensschritt der thermischen Vulkanisation ist in FIG 5 schematisch gezeigt. Die Vulkanisationstemperaturen können typischerweise zwischen 60 °C und 90 °C liegen und sind auch abhängig von den zugegebenen Vulkanisationszusätzen. Es bildet sich nun eine formstabile, elastisch verformbare Grundschicht 5, insbesondere eine Latex- oder Kautschukbeschichtung aus.

Das Textilmaterial des Trägerhandschuhs ist bevorzugt aus entsprechenden Fasern oder Fäden gebildet, die die Vulkanisationstemperaturen aushalten, beispielsweise Baumwolle, ggf. gemischt mit elastischen Fasern. Zur Zufuhr der Wärme für die thermische Vulkanisation kann in einer besonderen Ausführungsform auch die Halteform 10 selbst beheizt werden, insbesondere durch integrierte elektrische Heizelemente oder durch induktives Erwärmen von außen.

Durch vorheriges Aufschäumen der Latex- oder Naturkautschukemulsion, die im Tauchbad 22 eingefüllt wird, kann die Grundschicht 5 Schaumeigenschaften oder Porosität bekommen und dadurch leichter werden und eine geringere Shore-Härte aufweisen und damit auch eine höhere Dämpfungsfunktion aufweisen.

Der erhaltene Handschuh aus Trägerhandschuh 2 und Grundschicht 5 kann in Ausführungsformen schon als Torwarthandschuh verwendet werden, z.B. als Trainingshandschuh, und hat schon den großen Vorteil, dass keine störenden Nähte vorhanden oder zumindest an der internen Fläche sind und die Grundschicht 5 eine Wasserdichtheit gewährleisten kann.

Auf die nunmehr ausgehärtete oder verfestigte Grundschicht 5 wird aber in der Regel in einem oder mehreren weiteren Verfahrensschritten wenigstens eine weitere Schicht 6 oder Beschichtung oder Oberflächenstruktur auf der freien Oberfläche der Grundschicht 5 aufgebracht, wie in FIG 6 gezeigt ist. Diese weitere Schicht 6 ist insbesondere eine Ballkontaktschicht bei einem Torwarthandschuh.

Die weitere Schicht 6 kann aus dem gleichen Beschichtungsmaterial wie die Grundschicht 5 oder derselben Beschichtungsflüssigkeit wie im ersten Beschichtungsschritt gebildet werden, bevorzugt wieder aus Kautschuk oder Latex.

In einer vorteilhaften Ausführungsform wird die weitere Schicht 6 aus einem unterschiedlichen Beschichtungsmaterial wie die Grundschicht 5 oder einer unterschiedlichen Beschichtungsflüssigkeit wie im ersten Beschichtungsschritt gebildet, vorzugsweise einem Kautschuk oder Latexmaterial mit anderen Eigenschaften. Hier wird also eine zweite Beschichtungsflüssigkeit BF verwendet, die unterschiedlich zur ersten Beschichtungsflüssigkeit BF aus dem ersten Beschichtungsschritt zur Erzeugung der Grundschicht 5 ist.

Dies kann beispielsweise zur Erreichung unterschiedlicher Eigenschaften von Trägerschicht oder Grundschicht 5 und Kontaktschicht 6 dienen.

Beispielsweise kann die obere oder weitere Schicht 6 aus einem höherwertigeren oder eine höhere Qualität als die Grundschicht 5 aufweisenden Material, insbesondere Kautschuk oder Latexmaterial, gebildet werden, beispielsweise einem für Profispieler verwendeten Material, während das Material der Grundschicht 5 für Freizeit oder Training vorgesehen ist.

Das Beschichtungsverfahren für die weitere Schicht 6 kann wieder ein Tauchverfahren sein, ist aber bevorzugt ein Sprühverfahren, wobei auch ein additives Verfahren (additive manufacturing) oder 3D-Druck Verfahren und/oder Abdeckmasken oder Schablonen zum Einsatz kommen können, um dezidierte Oberflächenstrukturen zu erzeugen. Auch für die Grundschicht 5 könne diese alternativen Methoden verwendet werden statt Tauchen.

Bei einem 3D-Druckverfahren wird die Beschichtungsflüssigkeit BF mit einem feinen Strahl als Aerosol in einzelnen kleinen Regionen oder Punkten gemäß räumlichen CAD Daten oder 3D Daten nacheinander aufgetragen und so additiv aufgebaut. Hierzu sind Freistrahl-Materialauftragsverfahren bekannt wie beispielsweise Multijet Modelling und Poly-jet Modelling (vgl https://de.wikipedia.orq/wiki/Freistrahl-Materialauftrag ). Bei dem Auftrag von Latex- oder Kautschukemulsion im Aerosol kann zur schnelleren Verfestigung gleichzeitig oder in bestimmten Abständen mittels Wärmezufuhr vulkanisiert werden, um einzelne Strukturelemente festzulegen, bevor die nächsten aufgebaut werden.

Es ist nun möglich, auf einer den gesamten Trägerhandschuh 2 bedeckende Grundschicht 5 deren gesamte Oberfläche zu beschichten, um den gesamten Handschuh mit einer zwei- oder mehrlagigen Schichtstruktur zu versehen.

Jedoch wird bevorzugt nun eine selektive weitere Beschichtung nur in Teilbereichen oder Funktionsbereichen vorgenommen, um gezielte Funktionen oder Funktionalitäten in diesen Teilbereichen des Torwarthandschuhs vorzusehen.

Beispielsweise können von den Fingerbereichen Z, M, R, K und D nur die vorderen Fingerbereiche, insbesondere die ersten Finger-Innenbereiche Z1, M1, R1, K1 und D1 und ggf. auch die rückseitigen Finger-Außenbereiche Z4, M4, R4, K4 und D4 mit der weiteren Schicht 6 beschichtet werden, beispielsweise durch Eintauchen des Trägerhandschuhs 2 mit der Grundschicht 5 nur mit diesen vorderen Fingerbereichen in die Beschichtungsflüssigkeit oder durch Besprühen oder 3D Bedrucken nur dieser Bereiche.

Es werden also nur ausgewählte oder vorgegebene Funktionsbereiche mit der Kontaktschicht 6 beschichtet und andere Bereiche freigelassen oder ausgespart, die dann nur mit der Grundschicht 5 beschichtet sind oder sogar vorn der externen Fläche des Trägerhandschuhs 2 gebildet werden.

Besonders vorteilhaft ist das weitgehende oder vollständige Freilassen oder Aussparen der inneren Finger-Gelenkbereiche ZU1 bis ZU3, MU1 bis MU3, RU1 bis RU3 und KU1 bis KU3 und vorzugsweise auch der inneren Daumen-Gelenkbereiche DU1 und DU2 oder auch DU3, um ein möglichst freies ungehindertes Beugen der Finger beim Greifen und Fangen und Festhalten des Balles zu ermöglichen (nach Art der natürlichen Scharniere).

Außerdem können gezielt nur die für das Fausten des Balles besonders zu dämpfenden Bereiche der Außen- oder rückseitigen Hand ein zweites Mal beschichtet werden, insbesondere die zweiten und dritten äußeren Finger-Gelenkbereiche ZU5 und ZU6, MU5 und MU6, RU5 und RU6 und KU5 und KU6 und die dazwischen liegenden dritten Finger-Außenbereiche Z6, M6, R6 und K6.

Außerdem können gezielt positive (Erhebungen) und negative (Vertiefungen) 3D-Strukturen und Reliefstrukturen und auch Design- und Bezeichnungsmerkmale mit 3D-Druck in dem Beschichtungsmaterial aufgedruckt werden

Der Handtellerbereich IH1 oder sogar der gesamte Innenhandbereich IH kann durch nur eine Grundschicht 5 dünner ausgebildet werden als der Außenhandbereich AH oder zumindest die oben genannten zweiten und dritten äußeren Finger-Gelenkbereiche ZU5 und ZU6, MU5 und MU6, RU5 und RU6 und KU5 und KU6 und die dazwischen liegenden dritten Finger-Außenbereiche Z6, M6, R6 und K6 sowie vorzugsweise auch der Handrückenbereich AH1.

Auch kann nach einer Abnutzung durch Reparaturspray ein Bereich wieder neu aufgefrischt werden.

Im Innenhandbereich IH haben in einer vorteilhaften Ausführungsform die freien Oberflächen der Kontaktschicht 6 oder auch der Grundschicht 5 durch eine entsprechende Materialwahl eine hohe Griffigkeit, um das Greifen, Fangen und Festhalten des Fußballes zu unterstützen oder begünstigen.

Im Außenhandbereich AH haben müssen die freien Oberflächen der Kontaktschicht 6 oder auch der Grundschicht 5 keine hohe Griffigkeit aufweisen. Dort kommt es eher auf das Fausten und Abwehren des Fußballes an, so dass dort noch stärker auf die dämpfenden Eigenschaften oder die Weichelastizität der Kontaktschicht 6 oder auch der Grundschicht 5 Wert gelegt wird.

In FIG 7 ist nun ein bevorzugter Aufbau einer Verbundschicht 40, die insbesondere eine Innenhand-Verbundschicht ist, im Schnitt zu sehen.

Die Verbundschicht 40 ist als Verbund aus einer ersten Textilschicht 41, einer anschließenden Dämpfungsschicht (oder: untere Schicht, Trägerschicht, Kaschierschicht) 42 (die der Grundschicht 5 entspricht), einer zweiten Textilschicht 43 und schließlich einer (äußersten) Ballkontaktschicht (oder: obere Schicht, Greifschicht, Fangschicht) 44 (die der Kontaktschicht 6 entspricht) aufgebaut. Die Ballkontaktschicht 44 weist an ihrer von der zweiten Textilschicht 43 oder der Dämpfungsschicht 42 abgewandten freien Oberfläche eine Ballkontaktfläche 44a zum Fangen oder Greifen des Fußballes auf. Die erste Textilschicht 41 bildet eine innerste, d.h. der Torwarthand benachbarte oder eine Handkontaktfläche für diese bildende Schicht.

Die Ballkontaktschicht 44 besteht zumindest überwiegend, vorzugsweise vollständig, aus einem geschäumten Naturkautschuklatexmaterial, also einem Latexschaum auf Basis von Naturkautschuk. Es können hier auch bereits an sich bekannte Latexschäume für die Ballkontaktschicht 44 bekannter Fußballtorwarthandschuhe verwendet werden, die sich durch eine hohe Griffigkeit auszeichnen.

Die Dämpfungsschicht 42 ist ebenfalls aus einem Latexschaum (oder: geschäumten Latexmaterial oder Naturkautschuk-Latexschaum gebildet.

Für die Herstellung und Zusammensetzung der Latexschäume für die Ballkontaktschicht 44 und die Dämpfungsschicht 42 werden wieder Beschichtungsverfahren wie beschrieben gewählt.

Die beiden Latexschäume der Ballkontaktschicht 44 und die Dämpfungsschicht 42 unterscheiden sich zumindest in der Elastizität und Dämpfung. Der Latexschaum der Dämpfungsschicht 42 ist weichelastischer als der Latexschaum der Ballkontaktschicht 44, weist insbesondere eine geringere SHORE-A-Härte auf. Die Shore-A-Härte der Dämpfungsschicht 42 ist im Allgemeinen zwischen 1 und 10 gewählt, insbesondere zwischen 7 und 9, und die Shore-A-Härte der Ballkontaktschicht 44 ist im Allgemeinen zwischen 15 und 30 gewählt.

Die Einstellung der verschiedenen Elastizitäten der beiden Latexschäume für die Ballkontaktschicht 44 und die Dämpfungsschicht 42 erfolgt bevorzugt durch die Einstellung unterschiedlicher Porigkeit der Latexschäume oder unterschiedlicher Größen und/oder Verteilungen der Luftporen oder Gasporen und/oder durch die Einstellung unterschiedliche Dichten in den beiden Latexschäumen. Dadurch ist es in einer vorteilhaften Ausführungsform möglich, für beide Latexschäume den gleichen Latexgrundstoff mit gleicher Zusammensetzung zu verwenden und nur durch das Schäumverfahren, insbesondere mechanische Schäumverfahren, die unterschiedlichen Eigenschaften einzustellen. So weist der weichelastischere Latexschaum der Dämpfungsschicht 42 zweckmäßigerweise im Mittel größere Poren als der Latexschaum für die Ballkontaktschicht 44, ist also stärker aufgeschäumt. Bei der Ballkontaktschicht 44 liegt die Porengröße bevorzugt unter 0,1 mm. Die Dichte des Latexschaums der Dämpfungsschicht 42 liegt bevorzugt in einem Bereich von 150 bis 250 kg/m³ während die Dichte des Latexschaums der Ballkontaktschicht 42 bevorzugt in einem Bereich von 300 bis 400 kg/m³ liegt.

Die beiden Textilschichten 41 und 42 bestehen bevorzugt aus einem gestricktes oder gewirkten Textilmaterial, beispielsweise aus Baumwolle und/oder Polyester und ggf. weiteren, vorzugsweise elastischen, Zusatzmaterialen oder Zusatzfäden wie z.B. elastischen Materialien.

Die zweite Textilschicht 43 dient zur Verbindung der beiden Latexschaumschichten, also der Dämpfungsschicht 42 und der Ballkontaktschicht 44 an ihren einander zugewandten Oberflächen. Wenn die beiden Latexschaumschichten 44 und 43 direkt miteinander verbunden oder vulkanisiert werden, kann aber auch die dazwischen liegende zweite Textilschicht 44 in der Innenhand-Verbundschicht 4 entfallen.

Die Dicke der Dämpfungsschicht 42 ist mit d2 bezeichnet und ist im Allgemeinen aus einem Bereich zwischen 2 mm und 5 mm gewählt, insbesondere zwischen 2,3 mm und 4 mm, vorzugsweise zwischen 3,0 mm und 3,2 mm. Die Dicke der Ballkontaktschicht 44 liegt typischerweise in einem Bereich zwischen 1,8 mm und 4 mm, insbesondere zwischen etwa 2,1 mm und 2,9 mm.

Die Dicke d1 der ersten Textilschicht 41 und die Dicke d3 der zweiten Textilschicht 43 sind im Allgemeinen beide deutlich, beispielsweise um einen Faktor 5 bis 15, kleiner als die Dicke d2 der Dämpfungsschicht 42 und die Dicke d4 der Ballkontaktschicht 44.

Gegenüber den Dämpfungsschichten aus Polyurethan (PU) Schaum bei bekannten Torwarthandschuhen weist die stärker aufgeschäumte oder großporigere Latexschaumschicht eine um ca. zehn Prozent größere Aufpralldämpfung auf. Weitere Vorteile sind die Nachhaltigkeit oder besserer Abbau des Materials und eine geringere Nässeaufnahme. Ein gleiches Volumenelement aus den beiden Latexschaumschichten 42 und 44 und den zusätzlichen beiden Textilschichten 41 und 43 hat eine Trockendichte von typischerweise etwa 1,9 g/cm³ und eine Nassdichte von ca. 3 g/cm³ im Vergleich zu einem herkömmlichen Aufbau mit einer PU-Schaum-Kaschierung, bei der vor allem die Nassdichte deutlich höher ist.

Außerdem können in der Innenhand-Verbundschicht leichter Prägungen vorgenommen werden. Ferner verbiegt sich das Material nicht so leicht, da die Ausdehnungskoeffizienten der beiden Latexschaumschichten relativ gleich sind.

Die beiden Naturkautschuk-Latexschäume für die Dämpfungsschicht 42 und die Ballkontaktschicht 44 können auch gemeinsam vulkanisiert oder vernetzt werden, vorzugsweise durch thermische Vulkanisation, und direkt miteinander verbunden werden, so dass die zweite Textilschicht 43 entfallen kann. Eine solche bevorzugte Ausführung ist in FIG 8 gezeigt. Die beiden Naturkautschuk-Latexschäume für die Dämpfungsschicht 42 und die Ballkontaktschicht 44 werden gemeinsam vulkanisiert oder vernetzt, beispielsweise durch thermische Vulkanisation, und dabei direkt miteinander verbunden.

Die FIG 9 bis 12 zeigen verschiedene besonders vorteilhafte Ausführungsformen von selektiv mit Funktionsschichtbereichen versehenen Sporthandschuhen, insbesondere Fußballtorwarthandschuhen, die gemäß der Erfindung hergestellt bzw. ausgebildet sind.

Die in FIG 9 bis 12 ohne Schraffur gezeichneten Bereiche sind nur mit der Grundschicht 5 beschichtet, und in den schraffiert eingezeichneten Funktionsbereichen ist, vorzugsweise auf die Grundschicht 5 oder auch direkt auf den Trägerhandschuh 2, die Kontaktschicht 6 aufgebracht. Bevorzugt ist im Wesentlichen der gesamte Trägerhandschuh 2 an Innenseite und Außenseite mit der Grundschicht 5 beschichtet, bevorzugt durch Eintauchen oder Aufsprühen und die Kontaktschicht 6 in den verschiedenen Funktionsbereichen durch Aufsprühen auf die Grundschicht 5 erzeugt, insbesondere unter Zuhilfenahme von Sprühmasken oder -schablonen zum Abdecken der (nicht schraffierten) nicht mit der Kontaktschicht 6 zu beschichtenden Bereiche.

In der Ausführungsform gemäß FIG 9 ist der Innenhandbereich IH des Torwarthandschuhs speziell in Funktionsbereichen, die beim Fangen oder Halten eines Fußballes als Greiffläche oder Kontaktfläche dienen, mit der Kontaktschicht 6 versehen und in den übrigen Bereichen nur mit der Grundschicht 5 und dadurch in diesen Bereichen flexibler und leichter, was die Dynamik und Leichtgängigkeit des Greifvorgangs beim Fangen unterstützt. Es sind zunächst die an den Fingerspitzen oder ersten Fingergliedern vorgesehenen ersten inneren Fingergliedbereiche, nämlich der erste innere Daumen-Gliedbereich D1, der erste innere Zeigefinger-Gliedbereich Z1, der erster innere Mittelfinger-Gliedbereich M1, der erste innere Ringfinger-Gliedbereich R1 und der erste innere Kleiner-Finger-Gliedbereich K1 zumindest überwiegend oder praktisch vollständig mit der Kontaktschicht 6 beschichtet. Ferner ist der proximale dritte innerer Daumen-Gliedbereich D3 und bevorzugt auch der dritte innerer Daumen-Gelenkbereich DU3 sowie ein gegenüberliegender Handkantenbereich HK des Handtellerbereichs IH1 jeweils mit der Kontaktschicht 6 beschichtet. Nur mit der Grundschicht 5 und nicht auch mit der weiteren Kontaktschicht 6 beschichtet (beispielsweise durch Abdecken mit einer Maske beim Aufsprühen oder Eintauchen) sind die übrigen Bereiche der Innenhand IH einschließlich der inneren Fingergelenkbereiche DU1 und DU2, ZU1 bis ZU3, MU1 bis MU3, RU1 bis RU3 und KU1 bis KU3 sowie der mittlere zweite Daumengliedbereich D2 und die zweiten und dritten inneren Fingergliedbereiche Z2 und Z3, M2 und M3, R2 und R3 und K2 und K3.

In der Ausführungsform gemäß FIG 10 ist der Innenhandbereich IH des Torwarthandschuhs in allen inneren Fingergliedbereichen D1 bis D3, Z1 bis Z3, M1 bis M3, R1 bis R3 und K1 bis K3 sowie an dem Handtellerbereich IH1 mit der Kontaktschicht beschichtet, jedoch nicht in den inneren Fingergelenkbereichen DU1 bis DU3, ZU1 bis ZU3, MU1 bis MU3, RU1 bis RU3 und KU1 bis KU3, in denen nur die Grundschicht 5 vorgesehen ist. Dadurch ist der Handschuh in diesen Gelenkbereichen flexibler und leichter und folgt den Biegefalten, was die Dynamik und Leichtgängigkeit des Greifvorgangs beim Fangen unterstützt. Es kann auch im Handtellerbereich IH1 noch ein quer verlaufender von der Kontaktschicht 6 ausgesparter Bereich vorgesehen sein, der das Biegen in diese Handtellerbereich erleichtert.

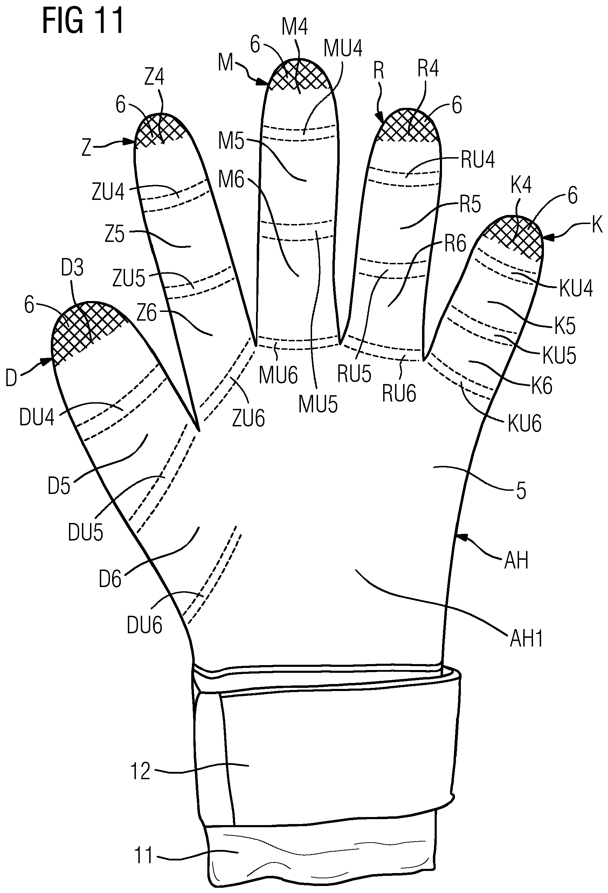

In der Ausführungsform gemäß FIG 11 ist der Außenhandbereich AH eines Torwarthandschuhs nur an den die Fingerspitzen, also den äußersten Enden der Fingerbereiche D, Z, M, R und K in den zugehörigen ersten äußeren Fingergliedbereichen D4, Z4, M4, R4 und K4 mit der Kontaktschicht 6 beschichtet, um das Greifen zu erleichtern und in den übrigen Bereichen nur mit der Grundschicht 5, was das Gewicht des Handschuhs geringhält.

Die Ausführungsform des Außenhandbereichs AH gemäß FIG 11 kann mit einer der Ausführungsformen des Innenhandbereichs IH gemäß FIG 9 oder 10 kombiniert werden, wobei dann die Kontaktschicht 6 um die Fingerspitzen herum aufgebracht wird und sich somit auch an den Seitenbereichen oder Zwickeln erstreckt.

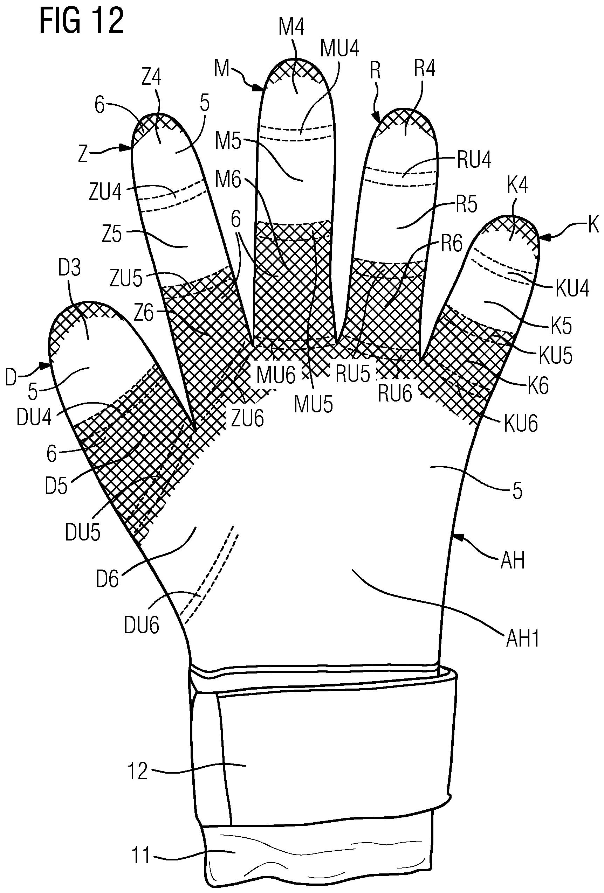

In der Ausführungsform eines Außenhandbereich AH eines Torwarthandschuhs gemäß FIG 12 ist ähnlich oder ebenso wie in FIG 11 an den Fingerspitzen, also den äußersten Enden der Fingerbereiche D, Z, M, R und K in den zugehörigen ersten äußeren Fingergliedbereichen D4, Z4, M4, R4 und K4 die Kontaktschicht 6 vorgesehen, darüber hinaus aber auch in den beim Fausten hauptsächlich in Kontakt mit dem Ball kommenden Funktionsbereichen an den Knöcheln, nämlich den zweiten und dritten äußeren Fingergelenkbereichen und dem dazwischen liegenden dritten Fingergliedbereich Z6, M6, R6 und K6 für zentrales Fausten sowie vorzugsweise auch an dem ersten und zweiten äußeren Daumengelenkbereich DU4 und DU5 sowie dem dazwischen liegenden zweiten äußeren Daumen-Gliedbereich D5 für seitliches Fausten oder Abwehren und ggf. - nicht dargestellt - auch im Handrückenbereich AH1 für seitliches Abwehren in die andere Richtung. In den übrigen Bereichen des Außenhandbereichs AH ist nur die Grundschicht 5 angeordnet ohne Kontaktschicht 6, was wieder für ein geringeres Gewicht des Handschuhs sorgt.

Auch die Ausführungsform des Außenhandbereichs AH gemäß FIG 12 kann - ebenso wie die gemäß FIG 11 - mit einer der Ausführungsformen des Innenhandbereichs IH gemäß FIG 9 oder 10 kombiniert werden.

Während die Kontaktschicht 6 im Innenhandbereich IH, wie in FIG 9 und 10, bevorzugt aus einem griffigen Material zum Unterstützen des Fangens und Festhaltens des Balles besteht, wie schon ausgeführt, wird für die Kontaktschicht 6 an dem Au-βenhandbereich AH bevorzugt dämpfendes Material, das nicht so griffig ist oder sein muss, verwendet, um das kontrollierte Fausten zu unterstützen.

Insbesondere kann für den Innenhandbereich IH, aber auch den Außenhandbereich AH der Ausführungsformen gemäß FIG 9 bis 12 auch eine Verbundschicht oder Mehrfachschicht gemäß einer der Ausführungsformen wie in FIG 5 bis 8 gezeigt verwendet werden.

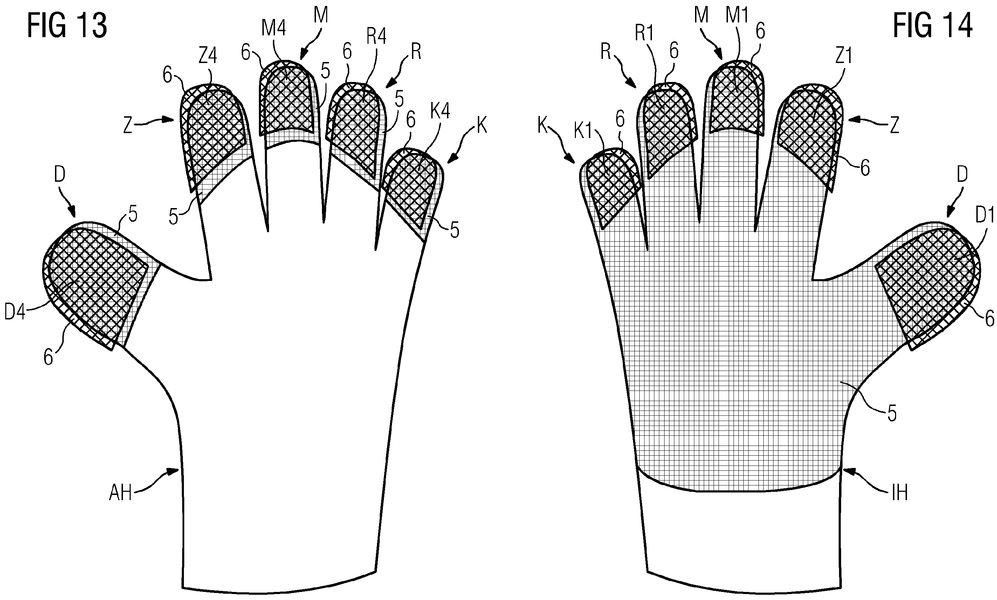

Die FIG 13 bis FIG 28 zeigen weitere Ausführungsformen von selektiv mit Funktionsschichtbereichen versehenen Sporthandschuhen, insbesondere Fußballtorwarthandschuhen, die gemäß der Erfindung hergestellt bzw. ausgebildet sind.

FIG 13 und FIG 14 zeigen einen Sporthandschuh mit einer Grundschicht 5, die den Innenhandbereich IH vollständig bedeckt, einschließlich des Handtellerbereichs IH1 sowie sämtlichen Fingerbereichen D, Z, M, R, K. Am Außenhandbereich AH ist die Grundschicht 5 auf den ersten äußeren Fingergliedbereichen D4, Z4, M4, R4, K4 aufgebracht. Die Grundschicht 5 ist als hochabriebfeste Latexmischung ausgebildet. Eine Kontaktschicht 6 mit erhöhter Griffigkeit ist selektiv an den ersten inneren Fingergliedbereichen D1, Z1, M1, R1, K1 des Innenhandbereichs IH und an den korrespondierenden ersten äußeren Fingergliedbereichen D4, Z4, M4, R4, K4 des Außenhandbereichs AH angeordnet. Die Kontaktschicht 6 verläuft kontinuierlich über die Fingerkuppen hinweg (wrap-around), wobei die Übergänge nahtfrei ausgeführt sind. Die selektive Kontaktschicht 6 erhöht die Greif- bzw. Fangsicherheit beim Greifen oder Fangen des Balls sowie die Kontrolle beim Fausten oder Abwehren des Balls. Die inneren Fingergelenkbereiche bleiben zur Flexibilisierung frei von der Kontaktschicht 6.

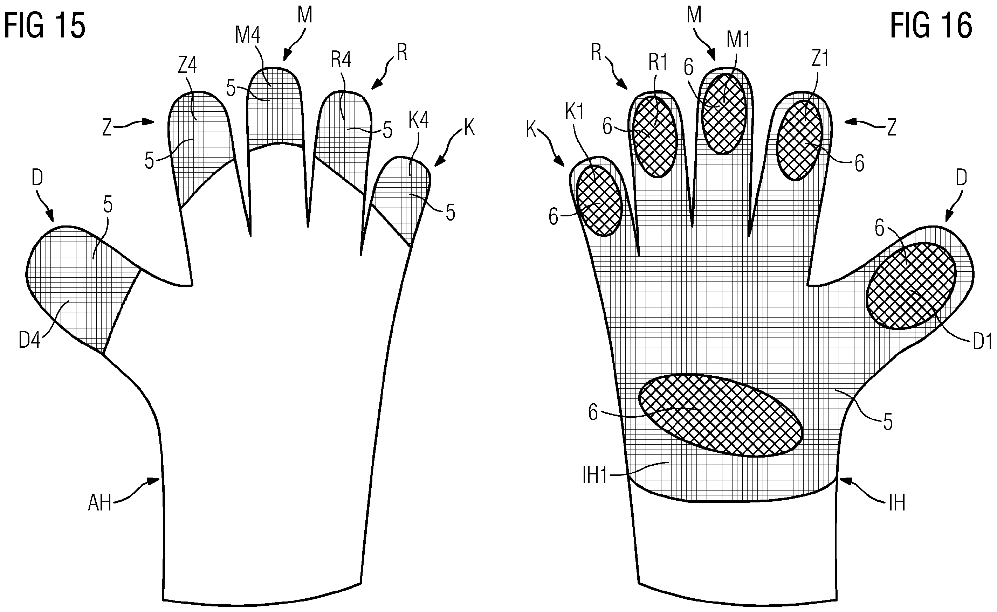

FIG 15 und FIG 16 zeigen eine Ausführungsform, bei der die Grundschicht 5, eine Latexmischung mit einer erhöhten Abriebfestigkeit, wiederrum vollständig auf dem Innenhandbereich IH, einschließlich dem Handtellerbereich IH1 und den Fingerbereichen D, Z, M, R, K, und auf den ersten äußeren Fingergliedbereichen D4, Z4, M4, R4, K4 des Außenhandbereichs AH aufgebracht ist. Die Kontaktschicht 6, eine Latexmischung mit einer erhöhten Griffigkeit, ist in definierten Kontaktbereichen aufgebracht. Diese Kontaktbereiche umfassen gemäß dieser Ausführungsform zumindest einen Teil des Handtellerbereichs IH1 sowie zumindest einen Teil der ersten inneren Fingergliedbereichen D1, Z1, M1, R1, K1. Dies sind Bereiche, welche typischerweise zuerst mit dem Ball beim Fangen oder Abwehren in Kontakt kommen.

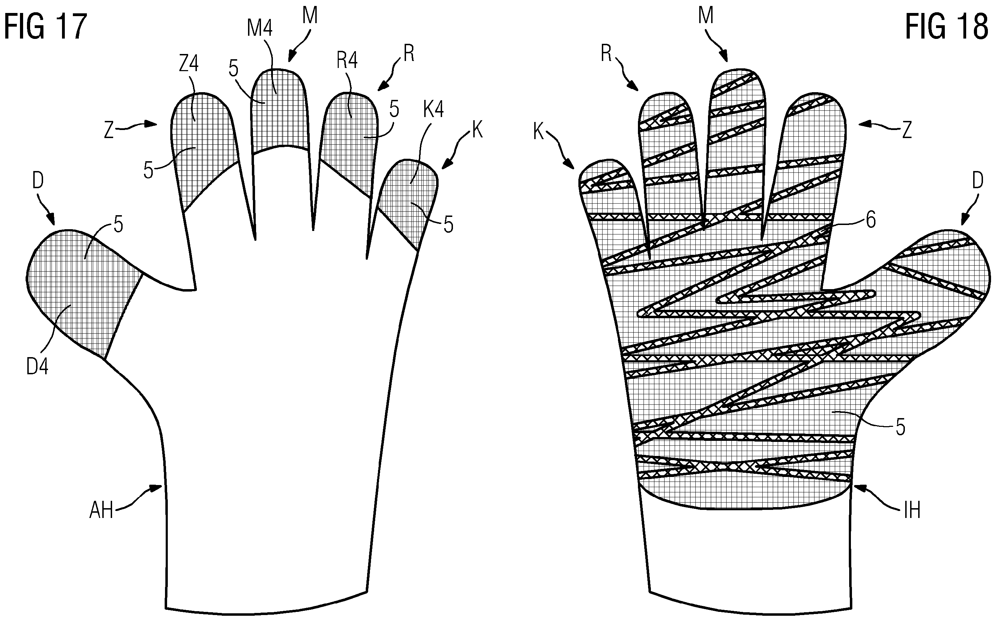

Die in FIG 17 und FIG 18 dargestellte Ausführungsform gleicht im Beschichtungsmuster der Grundschicht 5 den vorstehenden Ausführungsformen der FIG 13 und 14 sowie FIG 15 und 16. Die Grundschicht 5 ist vollständig auf dem Innenhandbereich IH, einschließlich dem Handtellerbereich IH1 und den Fingerbereichen D, Z, M, R, K, und auf den ersten äußeren Fingergliedbereichen D4, Z4, M4, R4, K4 des Außenhandbereichs AH aufgebracht. Die Grundschicht 5 umfasst in dieser Ausführungsform eine hochbeständige Latexmischung, die eine hohe Abriebfestigkeit aufweist. Die gesamte Fläche des Innenhandbereichs IH sowie der Fingerbereiche D, Z, M, R, K sind von einer linienartigen Kontaktschicht 6 durchzogen. Die Kontaktschicht 6 ist auch in diesem Fall eine Latexmischung mit einer erhöhten Griffigkeit. Die Linien weisen bevorzugt Linienbreiten im Bereich von 0,3 mm bis 3,0 mm und Linienabstände im Bereich von 0,5 mm bis 10,0 mm auf. Die Linienorientierung ist quer, längs und/oder diagonal ausgeführt. Es kann vorgesehen sein, dass die Linienstruktur in den inneren Fingergelenkbereichen unterbrochen ist, um die Beugezonen freizuhalten. Die Linienstruktur der Kontaktschicht 6 hat zur Folge, dass die Kontaktschicht 6 über den gesamten Innenhandbereich IH vorhanden ist und großflächig eine griffige Oberfläche bereitstellt. Somit ist für unterschiedlichste Abwehr- und Fangtechniken eine erhöhte Sicherheit und Kontrolle ermöglicht.

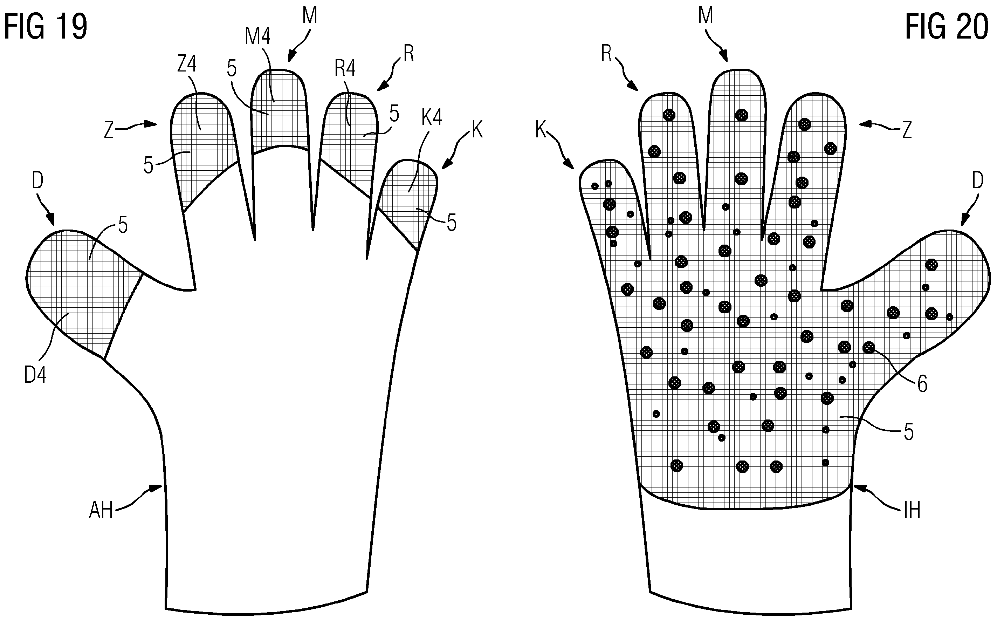

FIG 19 und FIG 20 zeigen eine Ausführungsform, bei der die Grundschicht 5, eine Latexmischung mit einer erhöhten Abriebfestigkeit, wiederrum vollständig auf dem Innenhandbereich IH, einschließlich dem Handtellerbereich IH1 und den Fingerbereichen D, Z, M, R, K, und auf den ersten äußeren Fingergliedbereichen D4, Z4, M4, R4, K4 des Außenhandbereichs AH aufgebracht ist. Die Kontaktschicht 6 ist als flächig verteilte Punktmatrix über den Innenhandbereich IH und die Fingerbereiche D, Z, M, R, K ausgebildet. Die mittlere Dichteverteilung der Punktmatrix kann im Bereich 0,2 bis 0,7 1/cm² liegen. bevorzugt zwischen 0,35 und 0,5 1/cm². Die Punktdurchmesser können unterschiedlich groß sein, wobei die Punktdurchmesser im Bereich von 0,3 mm bis 4,0 mm und Punktabstände im Bereich von 0,5 mm bis 10,0 mm liegen. Die Punktmatrix der Kontaktschicht 6 hat zur Folge, dass die Kontaktschicht 6 über den gesamten Innenhandbereich IH vorhanden ist und großflächig eine griffige Oberfläche bereitstellt. Somit ist für unterschiedlichste Abwehr- und Fangtechniken eine erhöhte Sicherheit und Kontrolle ermöglicht. Es kann ebenfalls vorgesehen sein, dass die Dichte der Punktverteilung an unterschiedlichen Bereichen unterschiedlich ist. So ist es möglich, dass in Bereichen, in denen eine erhöhte Greifsicherheit notwendig ist, beispielsweise die ersten inneren Fingergliedbereiche D1, Z1, M1, R1, K1 und/oder der Handtellerbereich IH1, eine höhere Dichte an aufgebrachten Punkten der Kontaktschicht 6 vorgesehen ist.

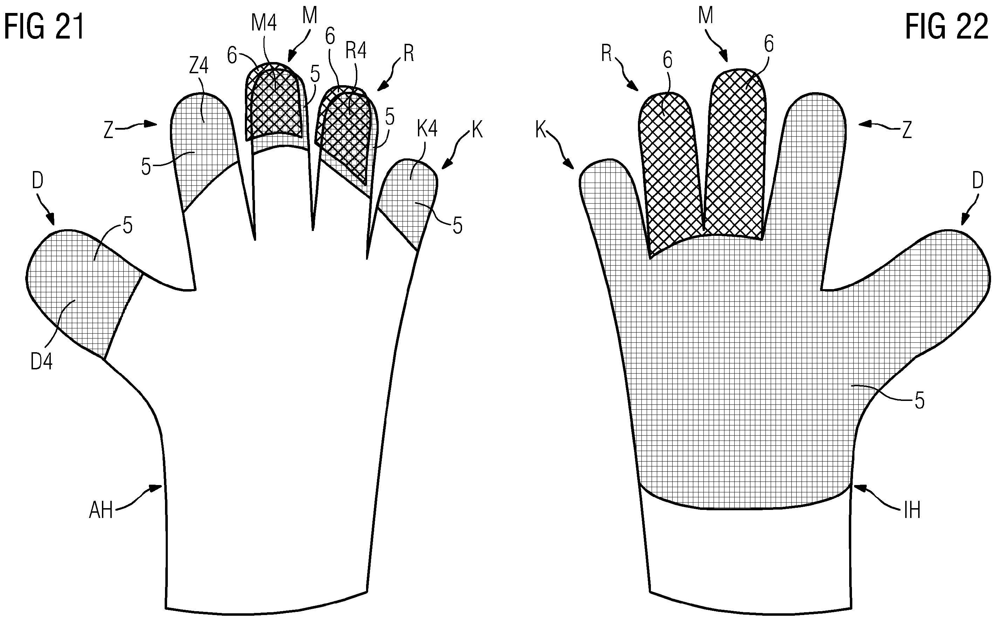

Auch die Ausführungsform gemäß FIG 21 und FIG 22 umfasst das Aufbringen der Grundschicht 5, eine Latexmischung mit einer erhöhten Abriebfestigkeit, vollständig auf dem Innenhandbereich IH, einschließlich dem Handtellerbereich IH1 und den Fingerbereichen D, Z, M, R, K, und auf den ersten äußeren Fingergliedbereichen D4, Z4, M4, R4, K4 des Außenhandbereichs AH. Die Kontaktschicht 6 ist auf einer ausgewählten Mehrzahl an Fingerbereichen M, R, sowie den zugehörigen ersten äußeren Fingergliedbereichen M4, R4 des Außenhandbereichs AH aufgebracht, bevorzugt kontinuierlich über die Fingerkuppen hinweg. Die Kontaktschicht 6 ist auch in diesem Fall eine Latexmischung mit einer erhöhten Griffigkeit. Somit kann die Griffigkeit an einzelnen, typischerweise für das Fangen und Abwehren beanspruchter, Fingern erhöht werden. Da die diesen Fingern zugeordnete Handschuhbereiche oftmals auch einem erhöhten Verschleiß unterliegen, ermöglicht die gezielte Aufbringung der Kontaktschicht 6 an diesen Handschuhbereichen eine hohe Haltbarkeit. Konfigurationen mit einer anderen Mehrzahl an Fingerbereichen sind ebenfalls möglich

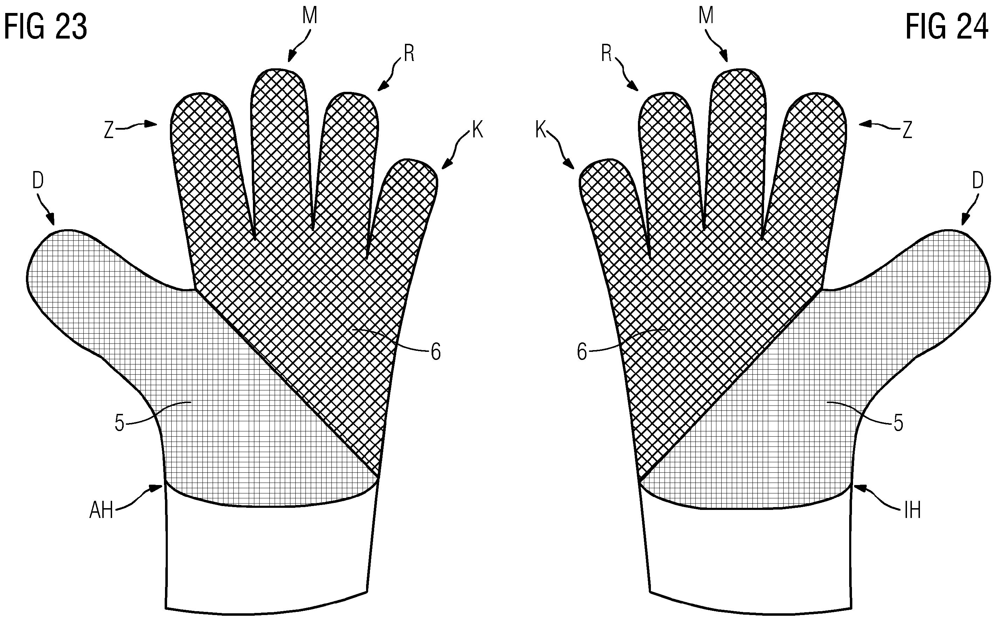

Gemäß einer weiteren Ausführungsform, wie in FIG 23 und FIG 24 dargestellt, ist es vorgesehen die Grundschicht 5 vollständig auf dem Innenhandbereich IH und vollständig auf dem Außenhandbereich AH aufzubringen. Die Kontaktschicht 6 ist großflächig, bevorzugt hälftig oder im Wesentlichen hälftig, auf dem Innenhandbereich IH und dem Außenhandbereich AH aufgebracht. Eine solche hälftige Beschichtung kann, wie in FIG 23 und 24 gezeigt, umfassen, dass die Trennlinie zwischen der Grundschicht 5 und der Kontaktschicht 6 diagonal über den Handschuh verläuft. Es ist aber auch möglich, dass die Trennlinie senkrecht, also in proximaler Richtung, oder quer, also senkrecht zur proximalen Richtung, verläuft. Die Grundschicht 5 und die Kontaktschicht 6 können dabei unterschiedliche Latexmischungen umfassen, um den Bereichen unterschiedliche Eigenschaften, wie Abriebfestigkeit oder Griffigkeit, zuzuweisen.

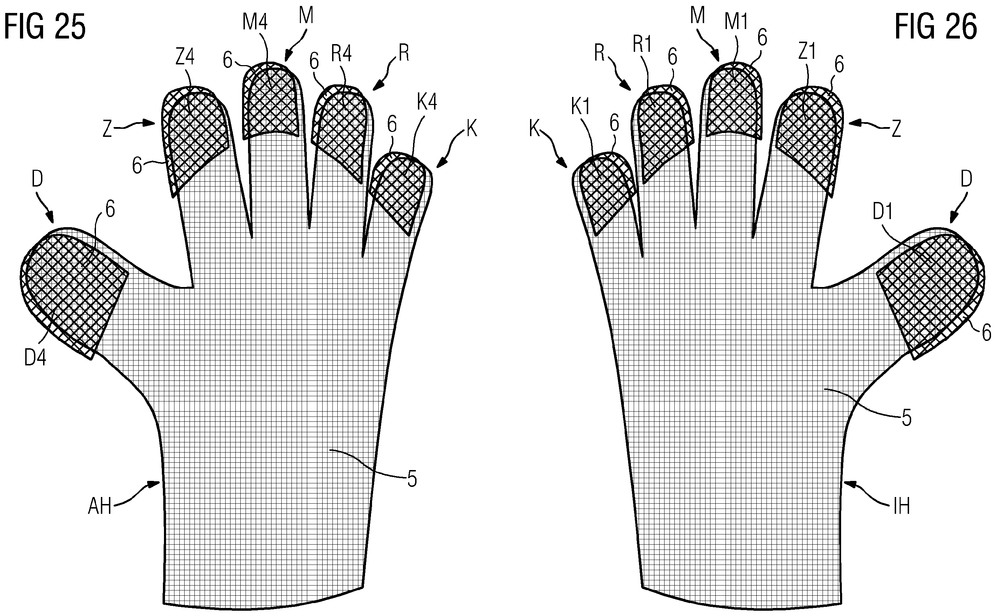

FIG 25 und FIG 26 zeigen eine weitere Ausführungsform, bei der die Grundschicht 5 vollständig auf dem Innenhandbereich IH und vollständig auf dem Außenhandbereich AH aufgebracht ist. Die Kontaktschicht 6 ist selektiv an den ersten inneren Fingergliedbereichen D1, Z1, M1, R1, K1 des Innenhandbereichs IH sowie den ersten äußeren Fingergliedbereichen D4, Z4, M4, R4, K4 des Außenhandbereichs AH aufgebracht, vorzugsweise erfolgt eine kontinuierliche Führung über die Fingerkuppen (wrap-around). Die Grundschicht 5 und die Kontaktschicht 6 können dabei unterschiedliche Latexmischungen umfassen. Durch die Veredelung durch die Kontaktschicht 6 können gewünschte Eigenschaften erreicht werden, wie Abriebfestigkeit oder Griffigkeit.

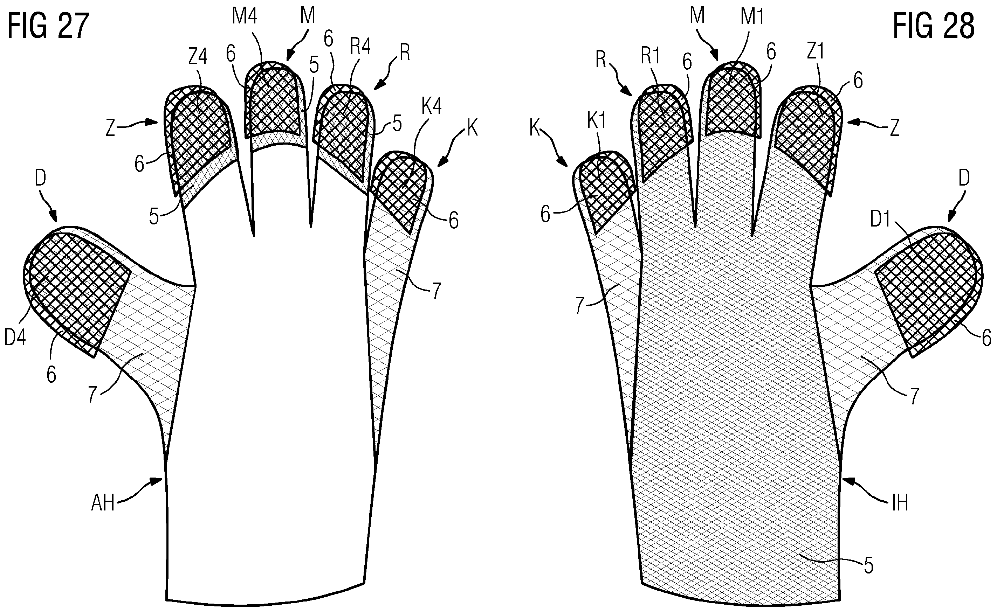

Gemäß einer weiteren Ausführungsform in FIG 27 und 28 ist die Grundschicht 5 vollständig auf dem Innenhandbereich IH, einschließlich dem Handtellerbereich IH1 und den Fingerbereichen D, Z, M, R, K, und auf den ersten äußeren Fingergliedbereichen D4, Z4, M4, R4, K4 des Außenhandbereichs AH aufgebracht. Die Kontaktschicht 6 ist selektiv an den ersten inneren Fingergliedbereichen D1, Z1, M1, R1, K1 des Innenhandbereichs IH und an den korrespondierenden ersten äußeren Fingergliedbereichen D4, Z4, M4, R4, K4 des Außenhandbereichs AH angeordnet. Die Kontaktschicht 6 verläuft kontinuierlich über die Fingerkuppen hinweg (wrap-around), wobei die Übergänge nahtfrei ausgeführt sind. Zusätzlich ist eine weitere Schicht 7, vorzugsweise eine steifere Latexmischung und/oder dicker Aufbringung, auf den Handschuh aufgebracht. Diese weitere Schicht 7 dient der Stabilisierung von neuralgischen Zonen, beispielsweise Bereiche erhöhter Verletzungsgefahr, wie den Daumen D oder der kleine Finger K. In dieser Ausführungsform ist die weitere Schicht auf dem gesamten Fingerbereich D, K des Daumens und des Kleinen Fingers im Innenhandbereich IH und im Außenhandbereich AH aufgebracht.

Der Torwarthandschuh gemäß einer der Ausführungsformen der FIG 9 bis FIG 12 sowie FIG 13 bis FIG 28 wird bevorzugt durch ein Verfahren gemäß der Erfindung hergestellt durch Aufsprühen oder 3D-Bedrucken der Beschichtungsflüssigkeit BF auf einen Trägerhandschuh 2 oder Tauchen des Trägerhandschuhs 2 in die Beschichtungsflüssigkeit BF. Die beim zweiten Beschichtungsschritt ausgesparten nicht schraffierten bzw. nicht abgesetzt schraffierten Bereiche werden bevorzugt mit einer oder mehreren entsprechend ausgebildeten Maske(n) oder Schablone(n) oder Abdeckfolie abgedeckt, die auf die Grundschicht 5 oder den Trägerhandschuh 2 aufgelegt oder auch vorübergehend aufgeklebt wird und dann wieder abgezogen wird.

Das Tauchen des Trägerhandschuhs 2 in die erste und/oder die zweite Beschichtungsflüssigkeit BF kann dabei, wie bereits im Zusammenhang mit FIG 4 beschrieben, durch eine von einem Roboter 4 gehaltene Halteform 10 in ein klassisches Tauchbad 30 erfolgen.

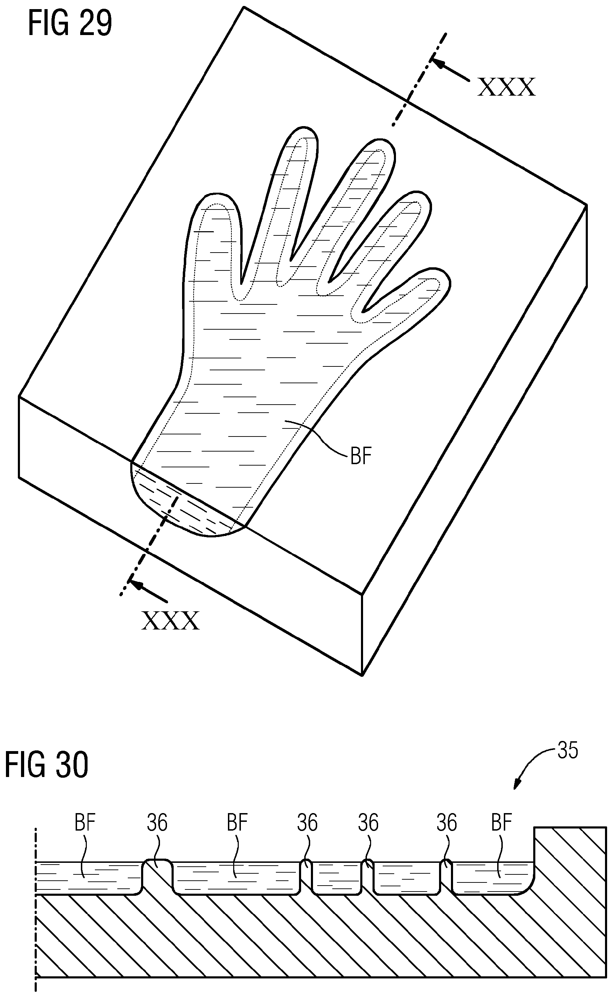

Gemäß einer weiteren vorteilhaften Ausführungsform ist es auch möglich, dass das Aufbringen der Beschichtungsflüssigkeit in einer handförmigen Negativform (oder: einer handförmigen oder an eine Hand angepasste Hohlform) 35 erfolgt, wie in FIG 29 und 30 gezeigt. Die Negativform 35 ist als einteilige, handförmige Wanne ausgebildet, deren Hohlraum die Kontur des Innenhandbereichs IH oder alternativ des Außenhandbereichs AH aufweist. Die Begrenzungsflächen sind handkonturtreu ausgebildet, sodass die Beschichtungsflüssigkeit BF an definierten Stellen mit der externen Oberfläche 21 des Trägerhandschuhs 2 in Kontakt tritt und dort eine Schicht ausbildet. Das Tiefenprofil bzw. die Tiefenlinien der Wanne sind ebenfalls an die Handkontur angepasst. Dies erlaubt ein gezieltes und räumlich definiertes Aufbringen der Schichtkonfigurationen und Funktionsbereiche. Außerdem muss in der Regel weniger Beschichtungsflüssigkeit BF bereitgestellt werden.

Die handförmige Negativform 35 ist dabei mit Beschichtungsflüssigkeit BF gefüllt und der Trägerhandschuh 2, welcher von einem Roboter 4 mit einer Halteform 10 gehalten wird, kann mit seinem Innenhandbereich IH oder seinem Außenhandbereich AH in die vorgesehene Negativform 35 getaucht werden, um jeweils eine Seite des Handschuhs zu beschichten.

Die Negativform kann dabei in einer Ausführungsform sowohl für den Innenhandbereich des linken oder rechten Handschuhs als auch für den Außenhandbereich des korrespondierenden rechten bzw. linken Handschuhs geeignet oder ausgestaltet sein. Es ist aber auch möglich, in Form, Krümmung, Profilierung und lokalen Tiefen der Negativform 35 eine Anpassung an Außenhand- oder Innenhandbereich vorzunehmen.

Ein selektives Beschichten muss nun nicht durch eine Schablone oder eine Maskierung erfolgen, sondern kann über die Geometrie und/oder Ausbildung der Begrenzungsflächen und Konturen oder Tiefenprofil bzw. Tiefenlinien der Negativform 35 erreicht werden und/oder durch nur teilweises Füllen der Negativform 35.

Gemäß einer weiteren Ausführungsform bildet die Negativform 35 nur Teilbereiche einer Hand bzw. eines Innenhandbereichs oder eines Außenhandbereich ab, beispielsweise die ersten Fingergliedbereiche, um diese zu beschichten.

Gemäß einer Weiterbildung, wie beispielhaft in FIG 30 gezeigt, weist die Negativform 35 Einsätze auf, die als Erhöhungen oder "Inseln" 36 in den Hohlraum ragen und bei befüllter Negativform 35 das lokale Benetzen verhindern. Die Einsätze können lösbar oder verschiebbar ausgeführt sein, um unterschiedliche Funktionsbereichmuster (z. B. Freistellen innerer Fingergelenkbereiche; Freistellen von Linien- oder Punktbahnen) ohne Maskieren zu realisieren. Alternativ können die Inseln 36 integraler Bestandteil der Form sein, sodass eine Negativform ein festgelegtes Funktionsbereichmuster abbildet.

FIG. 30 zeigt die Ausführung der Negativform 35 für die Innenhand IH für die Ausführungsform des Sporthandschuhs gemäß FIG 10 in Schnittdarstellung längs zum Mittelfingerbereich M. In den Bereichen der Fingergelenke sowie im Handtellerbereich sind die Erhöhungen oder Inseln 36 vorgesehen, um eine Beschichtung mit der die Kontaktschicht 6 bildende Beschichtungsflüssigkeit BF zu verhindern.

Die Negativform 35 kann als Funktionsform aus Metall oder Polymer gefertigt sein, optional mit austauschbaren, additiv gefertigten Einsatzmodulen zur schnellen Variation von Zonenlayouts. Alternativ kann die Negativform durch ein Abdruckverfahren von einer Masterhand oder einem handförmigen Positiv erzeugt werden.

In einer weiteren Ausführungsform weist die Negativform 35 integrierte Überläufe und/oder Niveauregler auf, um die Beschichtungsflüssigkeit BF auf definierter Höhe zu halten und einen reproduzierbaren Meniskus zu gewährleisten. So kann ein vollautomatisches Befüllen und/oder Entleeren in einem vollautomatischen Herstellungsprozess vorgesehen sein. Auch kann die Negativform 35 temperierbar ausgebildet sein, um die Viskosität und/oder die Benetzbarkeit der Beschichtungsflüssigkeit BF zu steuern.

In einem Beschichtungsschritt des Trägerhandschuhs 2, welcher durch eine von einem Roboter 4 gehaltene Halteform 10 gehalten ist, in der Negativform 35 kann vorgesehen sein, dass der Roboter 4 definierte Bewegungsprofile ausführt. Der Roboter 4 an die Verweildauer und/oder die Eintauchtiefe verändern, um unterschiedliche Beschichtungsmuster zu realisieren. Auch ein Schwenken der Halteform und/oder eine Taumel- oder Rollbewegung kann vorgesehen sein, um bestimmte Bereiche dicker bzw. dünner zu beschichten. Zur Steuerung der Kantenbildung kann eine Eintauchgeschwindigkeit und/oder eine Austauchgeschwindigkeit variiert werden. Weiterhin ist es möglich einen Eintauchwinkel und/oder einen Austauchwinkel zu verändern, um die unterschiedlichen Beschichtungsmuster zu realisieren.

Durch das direkte ggf. mehrlagige Aufbringen der Grundschicht 5 und der Kontaktschicht 6 auf den Trägerhandschuh 2 wie beschrieben werden Nähte vermieden und ist ein solch dezidiertes selektives Erzeugen von einzelnen Funktionsbereichen wie gezeigt möglich. Eine Ausführungsform gemäß FIG 9 oder 10 wäre mit dem Vernähen gemäß dem Stand der Technik aus vorgefertigtem zugeschnittenem Material hier einzelner Patches aufgrund der quer verlaufenden Nähte an den Rändern der Kontaktschichtbereiche kaum brauchbar für einen Torwart.

### Bezugszeichenliste

- 2: Trägerhandschuh
- 3: Roboterkopf
- 4: Roboter
- 5: Grundschicht
- 6: Ballkontaktschicht
- 7: weitere Schicht
- 10: Halteform
- 11: Zeigefingerelement
- 12: Mittelfingerelement
- 13: Ringfingerelement
- 14: Kleiner-Finger-Element
- 15: Daumenelement
- 16: Handgelenkbereich

- 20: Öffnung
- 21: externe Oberfläche
- 30: Tauchbad
- 35: handförmige Negativform
- 36: Erhöhungen/Inseln
- 40: Verbundschicht
- 41: erste Textilschicht
- 42: Dämpfungsschicht
- 43: zweite Textilschicht
- 44: Ballkontaktschicht
- 44a: Ballkontaktfläche
- 50: Torwarthandschuh
- AH: Außenhandbereich
- AH1: Handrückenbereich
- BF: Beschichtungsflüssigkeit
- D: Daumenbereich
- D1: erster innerer Daumen-Gliedbereich
- D2: zweiter innerer Daumen-Gliedbereich
- D3: dritter innerer Daumen-Gliedbereich
- D4: erster äußerer Daumen-Gliedbereich
- D5: zweiter äußerer Daumen-Gliedbereich
- D6: dritter äußerer Daumen-Gliedbereich
- DU1: erster innerer Daumen-Gelenkbereich
- DU2: zweiter innerer Daumen-Gelenkbereich
- DU3: dritter innerer Daumen-Gelenkbereich
- DU4: erster äußerer Daumen-Gelenkbereich
- DU5: zweiter äußerer Daumen-Gelenkbereich
- DU6: dritter äußerer Daumen-Gelenkbereich
- HK: Handkantenbereich
- IH: Innenhandbereich
- IH1: Handtellerbereich
- K: Kleiner-Finger-Bereich
- K1: erster innerer Kleiner-Finger-Gliedbereich
- K2: zweiter innerer Kleiner-Finger-Gliedbereich
- K3: dritter innerer Kleiner-Finger-Gliedbereich
- K4: erster äußerer Kleiner-Finger-Gliedbereich
- K5: zweiter äußerer Kleiner-Finger-Gliedbereich
- K6: dritter äußerer Kleiner-Finger-Gliedbereich
- KU1: erster innerer Kleiner-Finger-Gelenkbereich
- KU2: zweiter innerer Kleiner-Finger-Gelenkbereich
- KU3: dritter innerer Kleiner-Finger-Gelenkbereich
- KU4: erster äußerer Kleiner-Finger-Gelenkbereich
- KU5: zweiter äußerer Kleiner-Finger-Gelenkbereich
- KU6: dritter äußerer Kleiner-Finger-Gelenkbereich
- M: Mittelfingerbereich
- M1: erster innerer Mittelfinger-Gliedbereich
- M2: zweiter innerer Mittelfinger-Gliedbereich
- M3: dritter innerer Mittelfinger-Gliedbereich
- M4: erster äußerer Mittelfinger-Gliedbereich
- M5: zweiter äußerer Mittelfinger-Gliedbereich
- M6: dritter äußerer Mittelfinger-Gliedbereich
- MU1: erster innerer Mittelfinger-Gelenkbereich
- MU2: zweiter innerer Mittelfinger-Gelenkbereich
- MU3: dritter innerer Mittelfinger-Gelenkbereich
- MU4: erster äußerer Mittelfinger-Gelenkbereich
- MU5: zweiter äußerer Mittelfinger-Gelenkbereich
- MU6: dritter äußerer Mittelfinger-Gelenkbereich
- R: Ringfingerbereich
- R1: erster innerer Ringfinger-Gliedbereich
- R2: zweiter innerer Ringfinger-Gliedbereich
- R3: dritter innerer Ringfinger-Gliedbereich
- R4: erster äußerer Ringfinger-Gliedbereich
- R5: zweiter äußerer Ringfinger-Gliedbereich
- R6: dritter äußerer Ringfinger-Gliedbereich
- RU1: erster innerer Ringfinger-Gelenkbereich
- RU2: zweiter innerer Ringfinger-Gelenkbereich
- RU3: dritter innerer Ringfinger-Gelenkbereich
- RU4: erster äußerer Ringfinger-Gelenkbereich
- RU5: zweiter äußerer Ringfinger-Gelenkbereich
- RU6: dritter äußerer Ringfinger-Gelenkbereich
- W: Wärme
- Z: Zeigefingerbereich
- Z1: erster innerer Zeigefinger-Gliedbereich
- Z2: zweiter innerer Zeigefinger-Gliedbereich
- Z3: dritter innerer Zeigefinger-Gliedbereich
- Z4: erster äußerer Zeigefinger-Gliedbereich
- Z5: zweiter äußerer Zeigefinger-Gliedbereich
- Z6: dritter äußerer Zeigefinger-Gliedbereich
- ZU1: erster innerer Zeigefinger-Gelenkbereich
- ZU2: zweiter innerer Zeigefinger-Gelenkbereich
- ZU3: dritter innerer Zeigefinger-Gelenkbereich
- ZU4: erster äußerer Zeigefinger-Gelenkbereich
- ZU5: zweiter äußerer Zeigefinger-Gelenkbereich
- ZU6: dritter äußerer Zeigefinger-Gelenkbereich
- d1: Dicke (erste Textilschicht 41)
- d2: Dicke (Dämpfungsschicht 42)
- d3: Dicke (zweite Textilschicht 43)
- d4: Dicke (Ballkontaktschicht 44)

## Patentansprüche

1. Verfahren zum Herstellen eines Sporthandschuhs, insbesondere Fußballtorwarthandschuhs,
a) bei dem ein Trägerhandschuh (2), vorzugsweise aus einem textilen Material, bereitgestellt wird,
b) wobei der Trägerhandschuh (2) und/oder der Sporthandschuh einen Innenhandbereich (IH) und einen Außenhandbereich (AH) aufweist und mit einem Daumenbereich (D), einem Zeigefingerbereich (Z), einem Mittelfingerbereich (M), einem Ringfingerbereich (R) und einem Kleiner-Finger-Bereich (K) sowie einem Handtellerbereich (IH1) und einem Handrückenbereich (AH1) ausgebildet ist und an jedem Fingerbereich (D, Z, M, R, K) für jedes der, von distal nach proximal gesehen, ersten bis dritten Fingerglieder jeweils einen zugehörigen ersten bis dritten inneren Fingergliedbereich (D1 bis D3, Z1 bis Z3, M1 bis M3, R1 bis R3, K1 bis K3) und einen zugehörigen ersten bis dritten äußeren Fingergliedbereich (D4 bis D6, Z4 bis Z6, M4 bis M6, R4 bis R6, K4 bis K6) und für jedes der, von distal nach proximal gesehen, ersten bis dritten Fingergelenke jeweils einen zugehörigen ersten bis dritten inneren Finger-Gelenkbereich (DU1 bis DU3, ZU1 bis ZU3, MU1 bis MU3, RU1 bis RU3, KU1 bis KU3) und einen zugehörigen ersten bis dritten äußeren Fingergelenkbereich (DU4 bis DU6, ZU4 bis ZU6, MU4 bis MU6, RU4 bis RU6, KU4 bis KU6) aufweist,
c) bei dem in einem ersten Beschichtungsschritt der Innenhandbereich (IH) des Trägerhandschuhs (2) vollständig oder im Wesentlichen vollständig sowie der Außenhandbereich (AH) des Trägerhandschuhs (2) zumindest teilweise mit einer Grundschicht (5) beschichtet wird durch Aufsprühen oder 3D-Bedrucken einer oder Eintauchen in eine erste Beschichtungsflüssigkeit (BF),
d) bei dem in einem zweiten Beschichtungsschritt auf die Grundschicht (5) und/oder auf freie Bereiche des Trägerhandschuhs (2) vorgegebene Funktionsbereiche mit einer Kontaktschicht (6), insbesondere Ballkontaktschicht (44), beschichtet werden durch Aufsprühen oder 3D-Bedrucken einer oder Eintauchen in eine zweite Beschichtungsflüssigkeit (BF), wobei die vorgegebenen Funktionsbereiche zumindest teilweise die ersten inneren Fingergliedbereiche (D1, Z1, M1, R1, K1) einer ausgewählten Mehrzahl von Fingerbereichen (D, Z, M, R, K)
sowie wahlweise
(i) zumindest teilweise die ersten äußeren Fingergliedbereiche (D4, Z4, M4, R4, K4) der ausgewählten Fingerbereiche (D, Z, M, R, K) kontinuierliche über die Fingerkuppen hinweg, oder
(ii) zumindest teilweise den Handtellerbereich (IH1), oder
(iii) zumindest teilweise die ersten äußeren Fingergliedbereiche (D4, Z4, M4, R4, K4) der ausgewählten Fingerbereiche (D, Z, M, R, K) kontinuierlich über die Fingerkuppen hinweg und zumindest teilweise den Handtellerbereich (IH1) umfassen.

2. Verfahren nach Anspruch 1, bei dem die erste Beschichtungsflüssigkeit und/oder die zweite Beschichtungsflüssigkeit auf Basis von Naturkautschuk(en) und/oder Synthesekautschuk(en), insbesondere als Schaum, vorgesehen wird, insbesondere
Isopren- oder Naturkautschuk-Elastomere (IR, NR)
Siloxan-Elastomer (SI), insbesondere ein Siloxankautschuk (SIR),
Butadien-Elastomere (BR),
Styrol/Butadien-Elastomere (SBR),
Acrylnitril/Butadien-Elastomere (NBR),
Isopren/Isobuthylen-Copolymere (Butylkautschuk)
Vinylelastomere, insbesondere Ethylen-Propylen-Copolymere (EPDM, EPM),
Ethylen-Vinylacetat-Copolymere (EVAC),
Acrylkautschuk (ACM),
Polyisobuthylen (PIB),
Urethankautschuk (PUR)
oder thermoplastische Elastomere (TPE).

3. Verfahren nach einem der vorhergehenden Ansprüche, bei dem
in dem ersten Beschichtungsschritt die Grundschicht (5) *in situ* vulkanisiert wird, vorzugsweise durch thermisches Vulkanisieren in einem Wärmebehandlungsschritt nach dem Aufbringen der Beschichtungsflüssigkeit,
und/oder
bei dem in dem zweiten Beschichtungsschritt die Kontaktschicht (5) *in situ vul*kanisiert wird, vorzugsweise durch thermisches Vulkanisieren in einem Wärmebehandlungsschritt nach dem Aufbringen der Beschichtungsflüssigkeit.

4. Verfahren nach einem der vorhergehenden Ansprüche,
bei dem ein einstückiger oder einteiliger oder aus einem zusammenhängenden Textilteil oder Textilmaterial gebildeter Trägerhandschuh (2) verwendet wird, der, im angezogenen Zustand, eine die Hand des Torwarts komplett umschließende oder einkleidende Form aufweist mit den die Finger der Hand umschließenden Fingerbereichen (Z, M, R, K und D) und dem den Handteller der Hand abdeckenden Handtellerbereich (IH1) und dem den Handrücken der Hand abdeckenden Handrückenbereich (AH1) und nur im Handgelenkbereich eine Öffnung (20), durch die die Hand des Torwarts eingeführt werden kann, aufweist, wodurch der Trägerhandschuh (2) eine kontinuierliche, bis auf die Öffnung (20) geschlossene externe Oberfläche (21) aufweist und eine kontinuierliche der Hand zugewandte und von der externen Oberfläche (21) abgewandte interne Oberfläche, wobei auf die externe Oberfläche (21) die Grundschicht bzw. Kontaktschicht (6) aufgebracht wird.

5. Verfahren nach einem der vorhergehenden Ansprüche, bei dem der Trägerhandschuh (2) zunächst von einer an die Handform des Trägerhandschuhs (2) angepassten Halteform (10), vorzugsweise durch die Öffnung (20), von innen ergriffen oder auf diese gezogen wird und vorzugsweise während des gesamten Beschichtungsverfahrens zumindest teilweise formschlüssig und/oder in der zu beschichtenden externen Oberfläche (21) in ihrer Gestalt räumlich stabil gehalten wird, wobei insbesondere ein Schwenkmechanismus zum Einschwenken eines Daumenelements (15) der Halteform (10) für das Einführen in den Trägerhandschuh (2) und anschließendes Ausschwenken für das Beschichtungsverfahren vorgesehen ist und/oder vorzugsweise ein Bewegungsmechanismus mit Antrieben zum Zusammenführen und Spreizen wenigstens eines Teils der Fingerelemente (11 bis 15) der Halteform (10), beispielsweise als Roboterhand eines humanoiden Roboters, wobei die Bewegung einer menschlichen Hand beim Anziehen oder Ausziehen eines Handschuhs von der Roboterhand nachgeahmt wird,
und/oder wobei ein Roboter (4), insbesondere Industrieroboter oder humanoider Roboter, oder ein Endlostransportmechanismus die Halteform (10) mit dem darauf befindlichen Trägerhandschuh (2) durch die verschiedenen Prozessschritte transportiert.

6. Verfahren nach Anspruch 5, bei dem der auf der Halteform (10) befindliche Trägerhandschuh (2) zu einem Tauchbad (22) transportiert wird und zum Beschichten mit der Grundschicht (5) oder auch der Kontaktschicht (6) zumindest teilweise in die darin befindliche Beschichtungsflüssigkeit (BF) getaucht wird oder bei dem der auf der Halteform (10) befindliche Trägerhandschuh (2) zu einer Sprühvorrichtung transportiert wird und dort mit der für die Grundschicht (5) oder auch die Kontaktschicht (6) vorgesehenen Beschichtungsflüssigkeit besprüht wird,
wobei sich jeweils vorzugsweise eine Schicht aus Beschichtungsflüssigkeit (BF) bildet, die an dem Textilmaterial des Trägerhandschuhs (2) an dessen externer Oberfläche (21) anhaftet und an einem weiteren Eindringen in den Hohlraum des Trägerhandschuhs (2) durch die intern an der Textilschicht anliegende Außenfläche der Halteform (10) gehindert wird.

7. Verfahren nach Anspruch 5 oder 6, bei dem der auf der Halteform (10) befindliche Trägerhandschuh (2) zu einer handförmigen Negativform (35) transportiert wird und zum Beschichten mit einer Schicht zumindest teilweise in die darin befindliche Beschichtungsflüssigkeit (BF) getaucht wird, wobei die handförmige Negativform (35) als zumindest teilweise handförmige Wanne ausgebildet ist, deren Hohlraum zumindest teilweise die Kontur zumindest eines Bereichs zumindest einer Hand aufweist, wobei die Halteform (10) vorzugsweise von einem Roboter (4) gehalten ist, welcher definierte Bewegungsprofile bei Eintauchen, Verweilen oder Auftauchen ausführt, wobei die handförmige Negativform (35) insbesondere temperierbar ausgebildet ist, um Materialeigenschaften der Beschichtungsflüssigkeit BF anzupassen, wobei in der handförmigen Negativform (35) vorzugsweise Inseln oder Erhöhungen (36) vorgesehen sind, so dass nicht zu beschichtende Bereiche an dem Trägerhandschuh (2) oder dem mit der Grundschicht (5) oder der Kontaktschicht (6) beschichteten Trägerhandschuh (2) beim Eintauchen auf den Inseln oder Erhöhungen (36) aufliegen und nicht beschichtet werden.

8. Verfahren nach einem der vorhergehenden Ansprüche, bei dem die nicht mit der Grundschicht (5) oder der Kontaktschicht (6) zu beschichtenden Bereiche an dem Trägerhandschuh (2) mittels einer Abdeckung oder Maske oder Schablone abgedeckt werden und somit nur die nicht abgedeckten Funktionsbereiche mit der Grundschicht bzw. Kontaktschicht beschichtet werden und dann die Abdeckung oder Maske oder Schablone wieder entfernt wird.

9. Verfahren nach einem der vorhergehenden Ansprüche, bei dem in einem dritten Beschichtungsschritt auf die Grundschicht (5) und/oder auf die Kontaktschicht (6) neuralgische Zonen erhöhter Verletzungsgefahr mit einer weiteren Schicht (7) beschichtet werden durch Aufsprühen oder 3D-Bedrucken einer oder Eintauchen in eine dritte Beschichtungsflüssigkeit (BF), wobei die neuralgischen Zonen zumindest den Daumenbereich (D) und/oder den Kleiner-Finger-Bereich (K) umfassen.

10. Sporthandschuh, insbesondere Fußballtorwarthandschuh, der vorzugsweise mit einem Verfahren gemäß einem der Ansprüche 1 bis 9 hergestellt ist,
a) einen Innenhandbereich (IH) und einen Außenhandbereich (AH) aufweist und mit einem Daumenbereich (D), einem Zeigefingerbereich (Z), einem Mittelfingerbereich (M), einem Ringfingerbereich (R) und einem Kleiner-Finger-Bereich (K) sowie einem Handtellerbereich (IH1) und einem Handrückenbereich (AH1) ausgebildet ist und
b) an jedem Fingerbereich (D, Z, M, R, K) für jedes der, von distal nach proximal gesehen, ersten bis dritten Fingerglieder jeweils einen zugehörigen ersten bis dritten inneren Fingergliedbereich (D1 bis D3, Z1 bis Z3, M1 bis M3, R1 bis R3, K1 bis K3) und einen zugehörigen ersten bis dritten äußeren Fingergliedbereich (D4 bis D6, Z4 bis Z6, M4 bis M6, R4 bis R6, K4 bis K6) und für jedes der, von distal nach proximal gesehen, ersten bis dritten Fingergelenke jeweils einen zugehörigen ersten bis dritten inneren Finger-Gelenkbereich (DU1 bis DU3, ZU1 bis ZU3, MU1 bis MU3, RU1 bis RU3, KU1 bis KU3) und einen zugehörigen ersten bis dritten äußeren Fingergelenkbereich (DU4 bis DU6, ZU4 bis ZU6, MU4 bis MU6, RU4 bis RU6, KU4 bis KU6) aufweist,
c) wobei der Sporthandschuh, insbesondere Fußballtorwarthandschuh, einen Trägerhandschuh (2), insbesondere aus einem textilen Material, aufweist,
d) wobei der Innenhandbereich (IH) des Trägerhandschuhs (2) vollständig oder im Wesentlichen vollständig mit einer Grundschicht (5) beschichtet ist sowie der Außenhandbereich (AH) des Trägerhandschuhs (2) im Bereich der ersten äußeren Fingergliedbereiche (D4, Z4, M4, R4, K4) zumindest teilweise mit der Grundschicht (5) beschichtet ist, die insbesondere dämpfende und/oder flüssigkeitsdichte Eigenschaften aufweist,
e) wobei auf der Grundschicht (5) und/oder auf freien, d.h. nicht mit der Grundschicht (5) versehenen, Bereichen des Trägerhandschuhs (2) Funktionsbereiche in einer vorgegebenen Konfiguration mit einer Kontaktschicht (6), insbesondere Ballkontaktschicht (44), beschichtet sind, wobei die Kontaktschicht (6) insbesondere eine griffige Oberfläche aufweist, um das Fangen, Greifen und Festhalten des Balles zu unterstützen, und/oder eine dämpfende Eigenschaft oder Oberfläche aufweist, um das Abwehren des Balles zu unterstützen,
f) wobei die vorgegebenen Funktionsbereiche zumindest teilweise die ersten inneren Fingergliedbereiche (D1, Z1, M1, R1, K1) einer ausgewählten Mehrzahl von Fingerbereichen (D, Z, M, R, K)
sowie wahlweise(i) zumindest teilweise die ersten äußeren Fingergliedbereiche (D4, Z4, M4, R4, K4) der ausgewählten Fingerbereiche (D, Z, M, R, K) kontinuierlich über die Fingerkuppen hinweg, oder
(ii) zumindest teilweise den Handtellerbereich (IH1), oder
(iii) zumindest teilweise die ersten äußeren Fingergliedbereiche (D4, Z4, M4, R4, K4) der ausgewählten Fingerbereiche (D, Z, M, R, K) kontinuierlich über die Fingerkuppen hinweg und zumindest teilweise den Handtellerbereich (IH1) umfassen.

11. Sporthandschuh, insbesondere Fußballtorwarthandschuh, nach Anspruch 10, bei dem die Grundschicht (5) vollständig auf dem Außenhandbereich (AH) aufgebracht ist oder
bei dem bei dem die Grundschicht (5) vollständig auf dem Außenhandbereich (AH) aufgebracht ist und die Kontaktschicht (6) in den dritten äußeren Fingergliedbereichen (Z6, M6, R6, K6, D6) und/oder in den zweiten äußeren Fingergelenkbereichen (ZU5, MU5, RU5, KU5, DU5) und/oder in den dritten äußeren Fingergelenkbereichen (ZU6, MU6, RU6, KU6) von Zeigefingerbereich (Z), Mittelfingerbereich (M), Ringfingerbereich (R) und Kleiner-Finger-Bereich (K) und vorzugsweise auch Daumenbereich (D) angeordnet ist.

12. Sporthandschuh, insbesondere Fußballtorwarthandschuh, nach Anspruch 10 oder 11, bei dem die Kontaktschicht (6) zumindest teilweise auf jedem der ersten inneren Fingergliedbereichen (D1, Z1, M1, R1, K1) aufgebracht ist, und bei dem die Kontaktschicht (6) zumindest teilweise auf jedem der ersten äußeren Fingergliedbereichen (D4, Z4, M4, R4, K4) aufgebracht ist.

13. Sporthandschuh, insbesondere Fußballtorwarthandschuh, nach einem der Ansprüche 10 bis 12, bei dem die Kontaktschicht (6) auf der Grundschicht (5) auf dem Innenhandbereich (IH) und auf den ersten inneren Fingergliedbereiche (D1, Z1, M1, R1, K1) aufgebracht ist, wobei die ersten bis dritten inneren Finger-Gelenkbereiche (ZU1 bis ZU3, MU1 bis MU3, RU1 bis RU3, KU1 bis KU3) von Zeigefingerbereich (Z), Mittelfingerbereich (M), Ringfingerbereich (R) und Kleiner-Finger-Bereich (K) und vorzugsweise auch zumindest die ersten und zweiten Finger-Gelenkbereiche (DU1, DU2) des Daumenbereichs (D) nicht mit der Kontaktschicht (6) beschichtet sind oder nur mit der Grundschicht (5) beschichtet sind oder eine freie externe Oberfläche des Trägerhandschuhs (2) aufweisen.

14. Sporthandschuh, insbesondere Fußballtorwarthandschuh, nach einem der Ansprüche 10 bis 13, bei dem in neuralgischen Zonen erhöhter Verletzungsgefahr eine weitere Schicht (7) aufgebracht ist, wobei die neuralgischen Zonen zumindest den Daumenbereich (D) und/oder den Kleiner-Finger-Bereich (K) umfassen.

15. Sporthandschuh, insbesondere Fußballtorwarthandschuh, nach einem der Ansprüche 10 bis 14,
bei dem die Grundschicht (5) und/oder die Kontaktschicht (6) durch Aufsprühen oder 3D-Bedrucken einer oder Eintauchen in eine Beschichtungsflüssigkeit (BF) erzeugt ist bzw. sind und
bei dem die Kontaktschicht (6, 44) zumindest in dem Innenhandbereich (IH) aus einem Schaum auf Basis von Naturkautschuk gebildet ist und/oder eine griffige Oberfläche zum Fangen Greifen und Festhalten des Balles aufweist und/oderbei dem die Grundschicht (5) aus einem Acrylnitril/Butadien-Elastomer (NBR) oder Acrylnitril/Butadien-Elastomer (NBR)-Schaum oder einem Urethankautschuk (PUR) oder Urethankautschuk (PUR)-Schaum oder einem Schaum auf Basis von Naturkautschuk, der vorzugsweise weichelastischer oder dämpfender ist als der Naturkautschukschaum der Kontaktschicht (5), gebildet ist.
